# EUROPEAN PATENT APPLICATION

(11) **EP 4 513 856 A1**
(43) Date of publication of application: **26.02.2025**
(21) Application number: 22937731.2
(22) Date of filing: 18.04.2022
(51) Int. Cl.: H04L 67/01

(54) **WIRELESS COMMUNICATION METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: RGTH
(86) International application number: PCT/CN2022/087503
(87) International publication number: WO 2023/201493

(57) **Abstract**

A method of wireless communication, a terminal device and a network device are provided. The method comprises: in a case where a first downlink channel is correctly decoded and a number L of repetition transmissions of the first downlink channel is less than K, terminating, by a terminal device, reception of remaining repetition transmissions of the first downlink channel, wherein the K represents a configured number of repetition transmissions of the first downlink channel and the K is a positive integer; and transmitting, by the terminal device, first indication information to a network device by back scattering, wherein the first indication information is used to indicate that the terminal device correctly decodes the first downlink channel.

## Description

### TECHNICAL FIELD

Embodiments of the present application relate to the field of communication, and specifically, to wireless communication methods, terminal devices, and network devices.

### BACKGROUND

In order to improve the reliability of data transmission, or to increase the cell coverage performance, a repetition transmission mechanism is introduced in the New Radio (NR) system. However, considering actual applications, not all scenarios can support all numbers of repetition transmissions. For example, in some scenarios, for a dynamic grant physical uplink shared channel (DG-PUSCH), the number of repetition transmissions such as {1, 2, 3, 4, 7, 8, 12, 16, 20, 24, 28, 32} may be supported, and for a configured grant physical uplink shared channel (CG-PUSCH), the number of repetition transmissions such as {1, 2, 3, 4, 7, 8, 12, 16} may be supported.

During actual data transmission, due to different channel conditions, the number of repetition transmissions required is also different. A network device can only configure the number of repetition transmissions as many as possible to ensure the reliability of data transmission. For example, when the PUSCH actually needs to be transmitted repeatedly 12 times to achieve the required performance, the network device will configure the number of repetition transmissions to 16 or 20, which will cause a waste of resources and bring about a greater transmission delay. Therefore, how to improve repetition transmission performance is an urgent problem to be solved.

### SUMMARY

The present application provides wireless communication methods, terminal devices and network devices, which are conducive to improving repetition transmission performance.

In a first aspect, a wireless communication method is provided. The method includes: in a case where a first downlink channel is correctly decoded and a number L of repetition transmissions of the first downlink channel is less than K, terminating, by a terminal device, reception of remaining repetition transmissions of the first downlink channel, where K represents a configured number of repetition transmissions of the first downlink channel, and the K is a positive integer; and
transmitting, by the terminal device, first indication information to a network device by back scattering, where the first indication information is used to indicate that the terminal device correctly decodes the first downlink channel.

In a second aspect, a wireless communication method is provided. The method includes: performing, by a terminal device, repetition transmissions of a first uplink channel, where a configured number of the repetition transmissions of the first uplink channel is K; in a case of receiving a first signal from a network device, terminating, by the terminal device, remaining repetition transmissions of the first uplink channel, where the first signal is used to indicate a termination of the repetition transmissions of the first uplink channel.

In a third aspect, a wireless communication method is provided. The method includes: receiving, by a network device, first indication information transmitted by a terminal device by back scattering, where the first indication information is used to indicate that the terminal device correctly decodes a first downlink channel; and
terminating, by the network device, remaining repetition transmissions of the first downlink channel.

In a fourth aspect, a wireless communication method is provided. The method includes: in a case where a first uplink channel is correctly decoded and a number Z of repetition transmissions of the first uplink channel is less than K, terminating, by a network device, reception of remaining repetition transmissions of the first uplink channel, where the K represents a total number of repetition transmissions of the first uplink channel, the K is a positive integer, and the Z is a positive integer; and transmitting a first signal to a terminal device for indicating a termination of repetition transmissions of the first uplink channel.

In a fifth aspect, a terminal device is provided to perform the method in any one of the first to second aspects or various implementations thereof. Specifically, the terminal device includes a functional module for performing the method in any one of the first to second aspects or various implementations thereof.

In a sixth aspect, a network device is provided to perform the method in any one of the third to fourth aspects or various implementations thereof. Specifically, the network device includes a functional module for performing the method in any one of the third to fourth aspects or various implementations thereof.

In a seventh aspect, a terminal device is provided and includes a processor and a memory. The memory is configured to store a computer program, and the processor is configured to invoke and run the computer program stored in the memory to perform the method in any one of the first to second aspects or various implementations thereof.

In an eighth aspect, a network device is provided and includes a processor and a memory. The memory is configured to store a computer program, and the processor is configured to invoke and run the computer program stored in the memory to perform the method in any one of the third to fourth aspects or various implementations thereof.

In a ninth aspect, a chip is provided to implement the method in any one of the first to fourth aspects or various implementations thereof. Specifically, the chip includes: a processor configured to invoke a computer program from a memory and run the computer program, so as to enable a device equipped with the apparatus to perform the method in any one of the first to fourth aspects or various implementations thereof.

In a tenth aspect, a computer-readable storage medium is provided for storing a computer program. The computer program enables a computer to perform the method in any one of the first to fourth aspects or various implementations thereof.

In an eleventh aspect, a computer program product is provided and includes computer program instructions. The computer program instructions enable a computer to perform the method in any one of the first to fourth aspects or various implementations thereof.

In a twelfth aspect, a computer program is provided. When being executed on a computer, the computer program enables the computer to perform the method in any one of the first to fourth aspects or various implementations thereof.

Through the above technical solutions, in a case where a terminal device correctly decodes a first downlink channel and the number of repetition transmissions of the first downlink channel does not reach the configured number K of repetition transmissions, the terminal device cancels reception processing of remaining repetition transmissions of the first downlink channel, and a network device may also cancel transmission processing of the remaining repetition transmissions of the first downlink channel, which is beneficial to preventing the terminal device and the network device from receiving and transmitting the downlink channel after correct transmission, reducing a transmission delay of the first downlink channel, improving resource utilization, and reducing the power consumption of the network device and the terminal device; and/or
in a case where the network device correctly decodes a first uplink channel and the number of repetition transmissions of the first uplink channel does not reach the configured number K of repetition transmissions, the network device cancels reception processing of remaining repetition transmissions of the first uplink channel and transmits a first signal to the terminal device, and the terminal device cancels transmision processing of the remaining repetition transmissions of the first uplink channel after receiving the first signal, which is beneficial to avoiding the network device and the terminal device receiving and transmitting after the correct transmission of the uplink channel, reducing a transmission delay of the first uplink channel, improving resource utilization, and reducing the power consumption of the network device and the terminal device.

### BRIEF DESCRIPTION OF THE DRAWINGS

FIG. 1 is a schematic diagram of a communication system architecture provided by the embodiments of the present application.
FIG. 2 is a schematic diagram of a zero power consumption communication system according to an example of the present application.
FIG. 3 is a diagram showing a principle of power harvesting according to an embodiment of the present application.
FIG. 4 is a diagram showing a principle of back scattering communication according to an embodiment of the present application.
FIG. 5 is a diagram showing a circuit principle of resistive load modulation according to an embodiment of the present application.
FIG. 6 is a timing schematic diagram of scheduling and retransmission of PDSCH/PUSCH in the NR system.
FIG. 7 is a schematic interaction diagram of a wireless communication method according to the embodiments of the present application.
FIG. 8 is a schematic diagram of a terminal device terminating reception of repetition transmissions of a PDSCH in advance according to an embodiment of the present application.
FIG. 9 is a schematic diagram of a terminal device terminating reception of repetition transmissions of a PDSCH in advance according to another embodiment of the present application.
FIG. 10 is a schematic interaction diagram of a wireless communication method according to an embodiment of the present application.
FIG. 11 is a schematic diagram of a transmitter of a terminal device according to an embodiment of the present application.
FIG. 12 is a schematic diagram of a transmitter of a terminal device according to another embodiment of the present application.
FIG. 13 is a schematic diagram of a transmitter of a terminal device according to yet another embodiment of the present application.
FIG. 14 is a schematic interaction diagram of another wireless communication method according to the embodiments of the present application.
FIG. 15 is a schematic diagram of a network device terminating reception of repetition transmissions of a PUSCH in advance according to an embodiment of the present application.
FIG. 16 is a schematic interaction diagram of a wireless communication method according to an embodiment of the present application.
FIG. 17 is a schematic diagram of a receiver of a terminal device according to an embodiment of the present application.
FIG. 18 is a schematic block diagram of a terminal device according to the embodiments of the present application.
FIG. 19 is a schematic block diagram of a network device according to the embodiments of the present application.
FIG. 20 is a schematic block diagram of another terminal device according to the embodiments of the present application.
FIG. 21 is a schematic block diagram of another network device according to the embodiments of the present application.
FIG. 22 is a schematic block diagram of a communication device according to the embodiments of the present application.
FIG. 23 is a schematic block diagram of a chip according to the embodiments of the present application.
FIG. 24 is a schematic block diagram of a communication system according to the embodiments of the present application.

### DETAILED DESCRIPTION

The technical solutions in the embodiments of the present application will be described below in conjunction with the drawings in the embodiments of the present application. Obviously, the described embodiments are only part of the embodiments of the present application, rather than all of the embodiments. With respect to the embodiments of the present application, all other embodiments obtained by ordinary skilled in the art without making any creative work shall fall within the scope of protection of the present application.

The technical solutions of the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an NR system evolution system, a LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), a wireless fidelity (WiFi) system, a 5-th generation (5G) communication system, a cellular Internet of Things system, a cellular passive Internet of Things system, or other communication systems.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems.

Optionally, the communication system in the embodiments of the present application may be applied to a carrier aggregation (CA) scenario, may also be applied to a dual connectivity (DC) scenario, or may further be applied to a standalone (SA) networking scenario.

Optionally, the communication system in the embodiments of the present application may be applied to an unlicensed spectrum, where the unlicensed spectrum may also be considered as a shared spectrum; alternatively, the communication system in the embodiments of the present application may also be applied to an licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user device, etc.

In the embodiments of the present application, the network device may be a device used for communicating with a mobile device. The network device may be an access point (AP) in the WLAN, a base transceiver station (BTS) in the GSM or CDMA, a base station (NodeB, NB) in the WCDMA, an evolutional base station (evolutional NodeB, eNB or eNodeB) in the LTE, or a relay station or an access point, or a vehicle-mounted device, a wearable device, and a network device (gNB) in the NR network, or a network device in the cellular Internet of Things, or a network device in the cellular passive Internet of Things, or a network device in a future evolved public land mobile network (PLMN) network or a network device in the NTN network, etc.

As an example but not limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station arranged on land, water or the like.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell here may include: a Metro cell, a Micro cell, a Pico cell, a Femto cell, etc. These small cells have the characteristics of small coverage and low transmission power, and are suitable for providing high-speed data transmission services.

The terminal device may be a station (ST) in the WLAN, a cellular phone, a cordless phone, a session initiation protocol (SIP) phone, a wireless local loop (WLL) station, a personal digital assistant (PDA) device, a handheld device with a wireless communication function, a computing device or another processing device connected to a wireless modem, a vehicle-mounted device, a wearable device, a terminal device in a next-generation communication system such as an NR network, or a terminal device in a future evolved public land mobile network (PLMN) network, a terminal device in a cellular Internet of Things, a terminal device in a cellular passive Internet of Things, etc.

In the embodiments of the present application, the terminal device may be deployed on land, including indoor or outdoor, handheld, wearable or vehicle-mounted; the terminal device may also be deployed on the water surface (e.g., on a ship); and the terminal device may also be deployed in the air (e.g., on an airplane, on a balloon and on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc.

As an example but not limitation, in the embodiments of the present application, the terminal device may also be a wearable device. The wearable device may also be referred to as a wearable smart device, which is a general term for wearable devices developed by performing intelligent design on daily wear (such as glasses, gloves, a watch, clothing, or shoes) using wearable technology. The wearable device is a portable device that is worn directly on a body, or integrated into the user's clothing or accessories. The wearable device is not just a hardware device, but also implements powerful functions through software support as well as data interaction and cloud interaction. Generalized wearable smart devices include devices (such as smart watches or smart glasses) that have full functionality, large-size, and may implement full or partial functionality without relying on smart phones, and devices (such as various smart bracelets or smart jewelries for monitoring phisical signs) that focus on a certain type of application functionality only and need to be used in conjunction with other devices (such as smart phones).

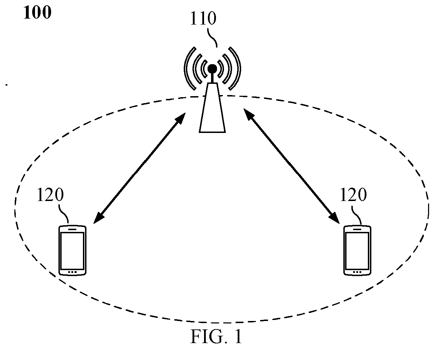

For example, a communication system 100 applied in the embodiments of the present application is shown in FIG. 1. The communication system 100 may include a network device 110, and the network device 110 may be a device for communicating with a terminal device 120 (or referred to as a communication terminal or a terminal). The network device 110 may provide communication coverage for a specific geographical area and may communicate with the terminal device located within the coverage area.

FIG. 1 exemplarily shows a network device and two terminal devices. Optionally, the communication system 100 may include a plurality of network devices, and a coverage area of each network device may include another number of terminal devices, which is not limited in the embodiments of the present application.

Optionally, the communication system 100 may further include a network controller, a mobility management entity, and other network entities, which is not limited in the embodiments of the present application.

It should be understood that a device having a communication function in a network/system in the embodiments of the present application may be referred to as a communication device. Taking the communication system 100 shown in FIG. 1 as an example, the communication device may include a network device 110 and a terminal device 120 that have communication functions. The network device 110 and the terminal device 120 may be the specific devices described above and will not be repeated here; and the communication device may also include other devices, such as a network controller, a mobility management entity and other network entities, in the communication system 100, which is not limited in the embodiments of the present application.

It should be understood that the terms "system" and "network" are often used interchangeably herein. The term "and/or" herein is only a description of an association relationship between the associated objects, and indicates that there may be three relationships between the associated objects. For example, A and/or B may represent three cases: A alone, A and B both, and B alone. In addition, the character "/" herein generally indicates that the associated objects before and after this character are in an "or" relationship.

It should be understood that the term "indicate" mentioned in the embodiments of the present application may be a direct indication, an indirect indication, or an indication of an association relationship. For example, A indicating B may mean that A directly indicates B (e.g., B may be obtained through A); A indirectly indicates B (e.g., A indicates C, and B may be obtained through C); or there is an association relationship between A and B.

In the description of the embodiments of the present application, the term "corresponding" may repersent a direct or indirect correspondence between two items, or an association relationship between the two items, or a relationship of indicating and being indicated, a relationship of configuring and being configured, and the like.

In the embodiments of the present application, the term "predefine" may be achieved by pre-saving corresponding codes, tables or other methods that may be used to indicate relevant information in a device (e.g., including a terminal device and a network device). The present application does not limit its specific implementation. For example, predefinition may refer to definition in a protocol.

In the embodiments of the present application, the "protocol" may refer to a standard protocol in the communication field, for example, the standard protocol may include an LTE protocol, an NR protocol, and related protocols applied in future communication systems, and the present application does not limit this.

To facilitate understanding of the technical solutions of the embodiments of the present application, the related art of the present application is explained.

### I. Zero power consumption communication

The key technologies of the zero power consumption communication include power harvesting, back scattering communication and low power consumption technology.

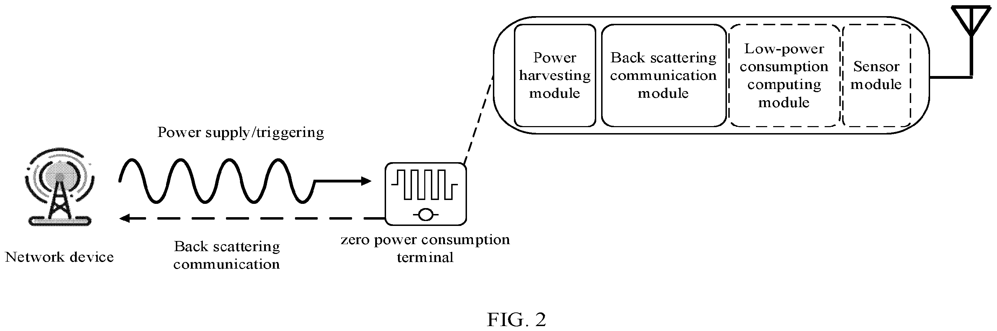

As shown in FIG. 2, a typical zero power consumption communication system (e.g., a radio frequency identification (RFID) system) includes a network device (e.g., a reader/writer of the RFID system) and a zero power consumption device (e.g., an electronic tag). The network device is configured to transmit a wireless power supply signal and a downlink communication signal to the zero power consumption device and receive a back scattering signal from the zero power consumption device. A basic zero power consumption device contains a power harvesting module, a back scattering module, and a low power consumption computing module. In addition, the zero power consumption device may also have a memory or a sensor used to store some basic information (such as object identification) or sensor data such as ambient temperature and ambient humidity.

A power harvesting module, a back scattering module, and a low power consumption computing module are contained. In addition, the zero power consumption device may also have a memory or a sensor used to store some basic information (such as object identification) or sensor data such as ambient temperature and ambient humidity.

For example, the power harvesting module may harvest power carried by radio waves in space (radio waves emitted by the network device are shown in FIG. 2) to drive the low power consumption computing module of the zero power consumption device and achieve back scattering. After obtaining power, the zero power consumption device may receive a control command from the network device and transmit data to the network device based on a control signaling by back scattering. The data transmitted may be data stored in the zero power consumption device itself (e.g., an identity identifier or pre-written information, such as the production date, brand, and manufacturer of the product). The zero power consumption device may also be loaded with various sensors, so as to report the data collected by various sensors based on the zero power consumption mechanism.

The following describes the key technologies in zero-power communication.

### 1. RF Power Harvesting

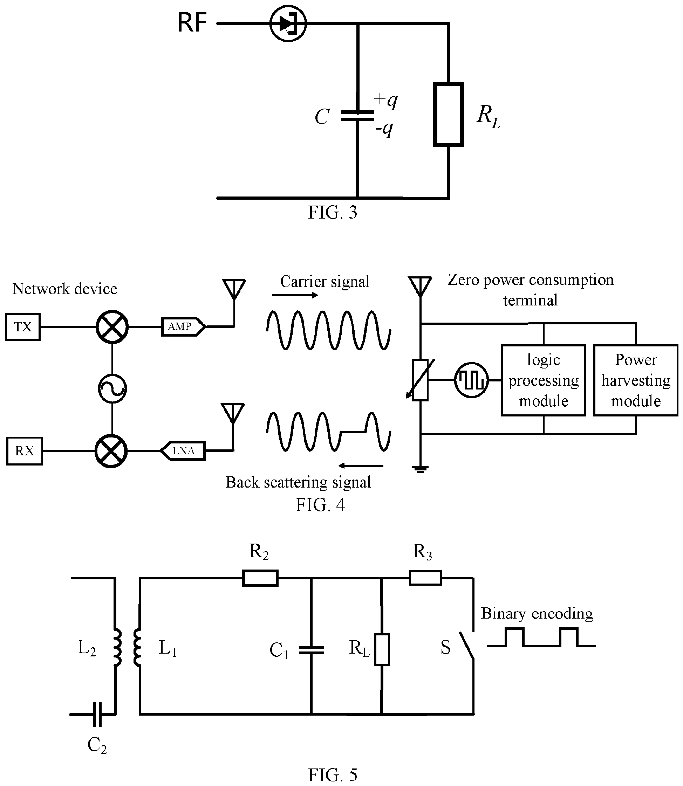

As shown in FIG. 3, the RF power harvesting module achieves harvesting electromagnetic wave power in space based on the principle of electromagnetic induction, and then obtains the power required for driving the zero power consumption device to work, such as for driving low power consumption demodulation and modulation modules, sensors, and memory access. Therefore, the zero power consumption device does not require traditional batteries.

### 2. Back Scattering Communication

As shown in FIG. 4, the zero power consumption device receives the carrier signal trasnmitted by the network device, modulates the carrier signal, loads the information required to be transmitted and radiates the modulated signal from the antenna. This information transmission process is referred to as back scattering communication. Back scattering and load modulation functions are inseparable. Load modulation adjusts and controls the circuit parameters of the oscillation loop of the zero power consumption device according to the rhythm of the data stream, so that parameters such as the impedance of the zero power consumption device change accordingly, thereby completing the modulation process. Load modulation technology mainly includes two methods: resistive load modulation and capacitive load modulation. In resistive load modulation, a resistor is connected in parallel with the load, which is switched on or off based on the control of the binary data stream, as shown in FIG. 5. The on and off of the resistor will cause the circuit voltage to change, thus realizing amplitude shift keying (ASK), that is, the modulation and transmission of the signal is achieved by adjusting the amplitude of the back scattering signal of the zero power consumption device. Similarly, in capacitive load modulation, the resonant frequency of the circuit may be changed by switching the capacitor on and off, thus realizing frequency shift keying (FSK), that is, the modulation and transmission of the signal is achieved by adjusting the operating frequency of the back scattering signal of the zero power consumption device.

It can be seen that the zero power consumption device performs information modulation on the incoming signal, thereby realizing the back scattering communication process. Therefore, the zero power consumption device has significant advantages:
(1) it does not actively transmit a signal, so it does not require complex radio frequency links, such as a power amplifier (PA) or a radio frequency filter;
(2) there is no need to actively generate a high-frequency signal, so no high-frequency crystal oscillator is required; and
(3) with the help of back scattering communication, a terminal signal transmission does not need to consume the power of the terminal itself.

### 3. Encoding technology

The data transmitted by the zero power consumption device may use different forms of codes to represent binary "1" and "0". The wireless radio frequency identification system usually use one of the following encoding methods: reverse non-return-to-zero (NRZ) encoding, Manchester encoding, unipolar return-to-zero encoding, differential bi-phase (DBP) encoding, differential encoding, pulse interval encoding (PIE), bi-phase space (FM0) encoding, Miller encoding, differential encoding, etc. In simple terms, different encoding technologies use different pulse signals to represent 0 and 1.

In some scenarios, based on the power source and usage methods of the zero power consumption devices, the zero power consumption devices may be divided into the following types.

### 1. Passivezero power consumption device

The zero power consumption device (such as an electronic tag in the RFID system) does not require a built-in battery. When the zero power consumption device approaches a network device (such as a reader/writer in the RFID system), the zero power consumption device is located within the near field formed by radiation of an antenna of the network device. Therefore, the antenna of the zero power consumption device generates an induced current through electromagnetic induction, and the induced current drives the low power consumption chip circuit of the zero power consumption device, so as to achieve the demodulation of the forward link signal and the modulation of the reverse link (or reflection link) signal. For the back scattering link, the zero power consumption device transmits signals by back scattering.

It can be seen that the passive zero power consumption device does not require a built-in battery to drive either the forward link or the reverse link, and is a truly zero power consumption device.

The passive zero power consumption device does not require a battery, and the RF circuit and baseband circuit are very simple. For example, the passive zero power consumption device does not require a low-noise amplifier (LNA), a power amplifier (PA), a crystal oscillator, an analog-to-digital converter (ADC) and other devices. Therefore, the passive zero power consumption device has many advantages such as a small size, a light weight, a very low price, and a long service life.

### 2. Semi-passive zero power consumption device

The semi-passive zero power consumption device is not equipped with a conventional battery itself, but may use the RF power harvesting module to harvest radio wave power and store the harvested power in a power storage unit (such as a capacitor). After obtaining power, the power storage unit may drive the low power consumption chip circuit of the zero power consumption device, so as to achieve the demodulation of the forward link signal and the modulation of the reverse link signal. For the back scattering link, the zero power consumption device transmits signals by back scattering.

It can be seen that the semi-passive zero power consumption device does not require a built-in battery to drive either the forward link or the reverse link. Although the power stored in the capacitor is used in the work, the power comes from the radio power collected by the power harvesting module. Therefore, it is also a truly zero power consumption device.

The semi-passive zero power consumption device inherits many advantages of the passive zero power consumption device, and thus has many advantages such as a small size, a light weight, a very low price and a long service life.

### 3. Active zero power consumption device

The zero power consumption device used in some scenarios may also be an active zero power consumption device, which may have a built-in battery. The battery is used to drive the low power consumption chip circuit in the zero power consumption device, so as to achieve the demodulation of the forward link signal and the modulation of the reverse link signal. However, for the back scattering link, the zero power consumption device transmits signals by back scattering. Therefore, the zero power consumption of this type of device is mainly reflected in the fact that the signal transmission of the reverse link does not require the power of the terminal itself, but uses back scattering.

### II. Cellular Passive Internet of Things

With the increase in 5G industry applications, the types of connected objects and application scenarios are increasing, and there will be an increasing requirements on the cost and power consumption of communication terminals. The application of battery-free, low-cost passive Internet of Things devices will become a key technology for cellular Internet of Thing (IoT), enriching the types and number of 5G network-linked terminals and truly realizing the Internet of Everything. Passive Internet of Things devices may be based on zero power consumption communication technologies such as the RFID technology, and can be extended on this basis to be suitable for the cellular IoT.

To facilitate understanding of the embodiments of the present application, a power supply signal, a scheduling signal and a carrier signal related to zero power consumption communication are explained.

### 1. Power supply signal

The power supply signal is the power source for the zero power consumption device to harvest power.

From the perspective of a power supply signal carrier, the power supply signal carrier may be a base station, a smart phone, a smart gateway, a charging station, a micro base station, etc.

From the perspective of a frequency band, the frequency band of the radio wave used for power supply may be low frequency, medium frequency, high frequency, etc.

From the perspective of a waveform, the waveform of the radio wave used for power supply may be a sine wave, a square wave, a triangle wave, a pulse, a rectangular wave, etc.

In addition, the power supply signal may be a continuous wave or a discontinuous wave (i.e., a certain period of interruption is allowed).

Optionally, the power supply signal may be an existing signal in the 3GPP standard, such as Sounding Reference Signal (SRS), Physical Uplink Shared Channel (PUSCH), Physical Random Access Channel (PRACH), Physical Uplink Control Channel (PUCCH), Physical Downlink Control Channel (PDCCH), Physical Downlink Shared Channel (PDSCH), or Physical Broadcast Channel (PBCH), or it may be a WIFI signal or a Bluetooth signal.

Optionally, the power supply signal may also be implemented by adding a new signal, for example, adding a signal dedicated to power supply.

### 2. Trigger signal or scheduling signal

The trigger signal is used to trigger or schedule the zero power consumption device to transmit data.

From the perspective of a trigger signal carrier, the trigger signal carrier may be a base station, a smart phone, a smart gateway, etc.

From the perspective of a frequency band, the frequency band of the radio wave used for triggering or scheduling may be low frequency, medium frequency, high frequency, etc.

From the perspective of a waveform, the waveform of the radio wave used for triggering or scheduling may be a sine wave, a square wave, a triangle wave, a pulse, a rectangular wave, etc.

In addition, the trigger signal may be a continuous wave or a discontinuous wave (i.e., a certain period of interruption is allowed).

Optionally, the trigger signal may be an existing signal in the 3GPP standard, such as SRS, PUSCH, PRACH, PUCCH, PDCCH, PDSCH or PBCH, or a WIFI signal or a Bluetooth signal, or the like.

Optionally, the trigger signal may also be implemented by adding a new signal, for example, adding a signal dedicated to triggering or scheduling.

### 3. Carrier signal

The carrier signal is used by the zero power consumption device to generate a back scattering signal. For example, the zero power consumption device may modulate the received carrier signal according to information to be transmitted to form a back scattering signal.

From the perspective of a carrier signal carrier, the carrier signal carrier may be a base station, a smart phone, a smart gateway, etc.

From the perspective of a frequency band, the frequency band of the radio wave used as the carrier signal may be low frequency, medium frequency, high frequency, etc.

From the perspective of a waveform, the waveform of the radio wave used as the carrier signal may be a sine wave, a square wave, a triangle wave, a pulse, a rectangular wave, etc.

In addition, the carrier signal may be a continuous wave or a discontinuous wave (i.e., a certain period of interruption is allowed).

Optionally, the carrier signal may be an existing signal in the 3GPP standard, such as SRS, PUSCH, PRACH, PUCCH, PDCCH, PDSCH or PBCH, or a WIFI signal or a Bluetooth signal, or the like.

Optionally, the carrier signal may also be implemented by adding a new signal, for example, adding a carrier signal dedicated to generating a back scattering signal.

It should be noted that in the embodiments of the present application, the power supply signal, the scheduling signal and the carrier signal may be the same signal, or may also be different signals. For example, the power supply signal may be used as the carrier signal, and the scheduling signal may also be used as the carrier signal.

To facilitate understanding of the embodiments of the present application, repetition transmissions of the data channel in the NR system is explained.

In order to improve the reliability of data transmission in the NR system, a data repetition transmission mechanism is designed.

For downlink data transmission of the Physical Downlink Shared Channel (PDSCH), a pdsch-AggregationFactor and a repetitionNumber are defined to control the number of repetition transmissions of the PDSCH.

Optionally, a configurable value of the pdsch-AggregationFactor is {1, 2, 4, 8}, and a configurable value of the repetitionNumber is {2, 3, 4, 5, 6, 7, 8, 16}.

Optionally, if the repetitionNumber is configured, the pdsch-AggregationFactor does not need to be configured.

The UE determines the number K of the repetition transmissions of the PDSCH according to the pdsch-AggregationFactor or repetitionNumber configuration. In a case of K>1, the network device uses the same symbol allocation scheme in K consecutive slots to transmit the same transport block (TB) multiple times, and the UE performs reception of the PDSCH in the K consecutive slots.

For uplink data transmission of the Physical Uplink Shared Channel (PUSCH), a pusch-AggregationFactor, a repK, a numberofrepetitions and the like parameters are defined to control the number of repetition transmissions of the PUSCH.

In some scenarios, a value range of the repK is {1, 2, 4, 8}, a value range of the pusch-AggregationFactor is {2, 4, 8}, and a value range of the numberofrepetitions is {1, 2, 3, 4, 7, 8, 12, 16}.

In other scenarios, a maximum number of repetitions is extended. For example, a value range of repK-r17 is {1, 2, 4, 8, 12, 16, 24, 32}, and a value range of numberOfRepetitions-r17 is {1, 2, 3, 4, 7, 8, 12, 16, 20, 24, 28, 32}. Moreover, a new counting method is introduced. For example, repetition transmissions may be counted based on available slots instead of continuous slots. In addition, a TBoMS data transmission method is also introduced.

To facilitate understanding of the embodiments of the present application, repetition transmissions of the control channel in the NR system is explained.

In the NR system, in order to improve the reliability of control information transmission, a control information repetition transmission mechanism is designed.

For example, for Physical Uplink Control Channel (PUCCH) formats 1/3/4, the number of repetition transmissions of the PUCCH may be configured through nrofslots in a PUCCH-FormatConfig.

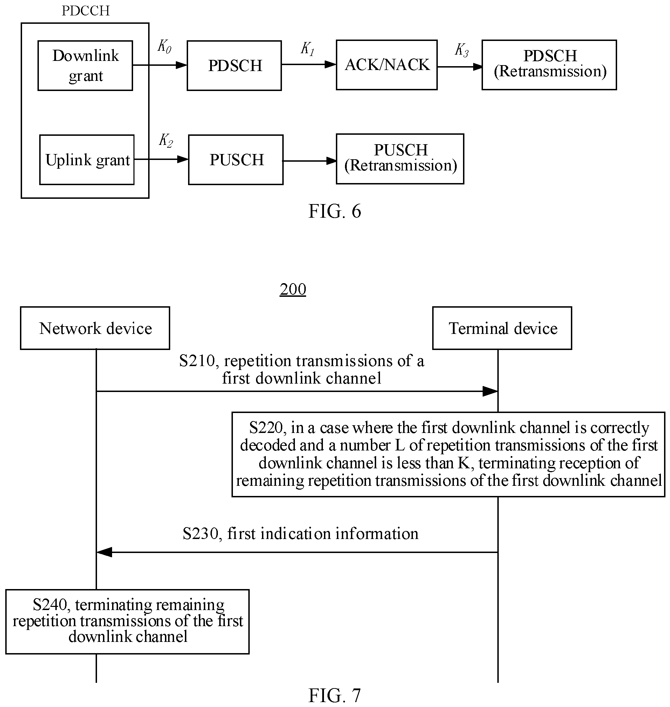

In the NR system, a timing relationship of scheduling or retransmission of the PDSCH/PUSCH is designed, as shown in FIG. 6.

For example, a terminal device receives a PDCCH of a network device, and the PDCCH is used to schedule a downlink grant (DL grant). The terminal device may receive a PDSCH on the downlink grant at a location of an offset of K0 slots after receiving the PDCCH, and further provide feedback of the PDSCH at a location of an offset of K1 slots after the PDSCH, such as feedback of an Acknowledgement (ACK) or a Negative Acknowledgement (NACK). In a case of the feedback of NACK, the network device may perform the retransmission of the PDSCH after an offset of K3 slots.

As another example, a terminal device receives a PDCCH of a network device, and the PDCCH is used to schedule an uplink grant (UL grant). The terminal device may transmit a PUSCH on the uplink grant at a location of an offset of K2 slots after receiving the PDCCH, and further perform the retransmission of the PUSCH after the PUSCH.

In summary, in order to improve the reliability of data transmission, or to increase the cell coverage performance, a repetition transmission mechanism is introduced in the NR system. However, considering the actual application, the NR system does not support all numbers of repetition transmissions. For example, in some scenarios, for the Dynamic Grant Physical Uplink Shared Channel (DG-PUSCH), the NR system may support repetition transmission times such as {1, 2, 3, 4, 7, 8, 12, 16, 20, 24, 28, 32}, and for the Configured Grant Physical Uplink Shared Channel (CG-PUSCH), the NR system may support repetition transmission times such as {1, 2, 3, 4, 7, 8, 12, 16}.

During actual data transmission, due to different channel conditions, the required number of reprtition transmissions is also different. A network device can only configure the number of repetition transmissions as many as possible to ensure the reliability of data transmission. For example, the PUSCH actually needs to be transmitted repeatedly 12 times to achieve the required performance, but the network device may configure the number of repetition transmissions to 16 or 20, which will cause a waste of resources and bring about a greater transmission delay. And under a frame structure of downlink slot, downlink slot, downlink slot, special slot, uplink slot (DDDSU), considering repetition transmissions based on available slots, when the configured number of repetition transmissions is 12 times, a total of 60 slots are required for 12 actual repeptition transmissions, and when the configured number of repetition transmissions is 16 or 20, 80 or 100 slots are required for repetition transmissions. The same principle is applied to repetition transmissions of the PDSCH. Currently, the PDSCH may support repetition transmission times such as {2, 3, 4, 5, 6, 7, 8, 16}. When the actual number of repetition transmissions required is greater than 8, the network device can only configure the number of repetition transmissions as 16, which will cause waste of resources and a large transmission delay. Therefore, how to improve the repetition transmission performance is an urgent problem to be solved.

To facilitate understanding of the technical solutions of the embodiments of the present application, the technical solutions of the present application are described in detail below through specific embodiments. The above-mentioned related art, as optional solutions, may be arbitrarily combined with the technical solutions of the embodiments of the present application, and they all belong to the protection scope of the embodiments of the present application. The embodiments of the present application include at least part of the following contents.

FIG. 7 is a schematic interaction diagram of a wireless communication method 200 according to the embodiments of the present application. As shown in FIG. 7, the method 200 includes at least part of the following contents:
S210, performing, by a network device, repetition transmissions of a first downlink channel, where the configured number of repetition transmissions of the first downlink channel is K, and K is a positive integer;
S220, in a case where the first downlink channel is correctly decoded and the number L of repetition transmissions of the first downlink channel is less than K, terminating, by a terminal device, reception of remaining repetition transmissions of the first downlink channel; and
S230, transmitting, by the terminal device, first indication information to the network device by back scattering, where the first indication information is used to indicate that the terminal device correctly decodes the first downlink channel.

It should be understood that the termination in the embodiments of the present application may also be replaced by stop.

In some embodiments, the first downlink channel may be a downlink data channel or a downlink control channel, for example, the first downlink channel includes a PDSCH and/or a PDCCH.

Optionally, the value of K may be configured when the network device schedules repetition transmissions of the first downlink channel.

Optionally, the value of K is determined according to the repetitionNumber or the AggregationFactor.

In some embodiments, correctly decoding the first downlink channel may include:
passing, by the received first downlink channel, a cyclic redundancy check (CRC).

In some embodiments, correctly decoding the first downlink channel may refer to:
correctly decoding, by the terminal device, the first downlink channel based on the L repetition transmissions of the first downlink channel, or
correctly decoding, by the terminal device, the first downlink channel at the L-th repetition transmission location of the first downlink channel.

In some embodiments, the L-th repetition transmission location of the first downlink channel may be a location where the first downlink channel is correctly decoded for the first time in K repetition transmissions of the first downlink channel.

In some embodiments, the correctly decoding the first downlink channel may also be expressed as correctly receiving the first downlink channel, correctly decrypting the first downlink channel, or correctly solving the first downlink channel, etc.

In some embodiments, the S220 may include:
in a case where the first downlink channel is correctly decoded and the number L of repetition transmissions of the first downlink channel is less than K, stopping, by the terminal device, receiving, detecting, decoding and other processing of the remaining repetition transmissions of the first downlink channel.

That is to say, in a case where the first downlink channel is correctly decoded and the number of repetition transmissions of the first downlink channel does not reach the configured number K of repetition transmissions, the terminal device may terminate the reception processing of the first downlink channel in advance, which is beneficial to avoiding the terminal device receiving the invalid downlink channels, improving resource utilization, reducing the transmission delay of the first downlink channel, and reducing the power consumption of the terminal device.

In some embodiments of the present application, as shown in FIG. 7, the method 200 further includes:
S240, terminating, by the network device, the remaining repetition transmissions of the first downlink channel.

For example, after receiving the first indication information, the network device terminates the remaining repetition transmissions of the first downlink channel.

Optionally, the network device may perform new scheduling on the downlink resources of the canceled remaining repetition transmissions of the first downlink channel, thereby improving resource utilization.

That is to say, in a case where the terminal device correctly decodes the first downlink channel and the number of repeptition transmissions of the first downlink channel does not reach the configured number K of repeptition transmissions, the network device may terminate (or cancel) the transmission processing of the first downlink channel in advance, which is beneficial to avoiding the network device transmitting the downlink channel after correct transmission, improving resource utilization, reducing the transmission delay of the first downlink channel, and reducing the power consumption of the network device.

Optionally, in some embodiments, after receiving the first indication information, the network device may not terminate the remaining repetition transmissions of the first downlink channel.

It should be understood that the embodiments of the present application do not limit the specific method by which the terminal device determines whether the first downlink channel is correctly decoded. The following describes the method by which the terminal device determines whether the first downlink channel is correctly decoded in combination with specific implementations, but the present application is not limited thereto.

Processing method 1: the terminal device merges and processes each repetition transmission of the first downlink channel to determine whether the first downlink channel is correctly decoded. That is, the processing frequency of the terminal device may be every repetition transmission.

Optionally, in the processing method 1, the terminal device may adopt an incremental processing method. For example, when processing the J-th repetition transmission of the first downlink channel, the terminal device may combine the merging and processing results of the first J-1 repetition transmissions of the first downlink channel, which is beneficial to reducing processing complexity.

Processing method 2: starting from receiving the M-th repetition transmission of the first downlink channel, the terminal device merges and processes each repetition transmission of the first downlink channel to determine whether the first downlink channel is correctly decoded, where M is a positive integer.

Generally speaking, the probability of successful decoding after receiving one repetition transmission of the first downlink channel is low. Compared with the processing method 1, the terminal device performs merged decoding after receiving M repetition transmissions of the first downlink channel, which is beneficial to improving the decoding success rate and avoiding the processing overhead caused by frequent decoding of the received first downlink channel.

Optionally, in the processing method 2, the terminal device may adopt an incremental processing method starting from the M-th repetition transmission of the first downlink channel. For example, when processing the (M+i)-th repetition transmission of the first downlink channel, the terminal device may combine the merging and processing results of the first (M+i-1) repetition transmissions of the first downlink channel, which is beneficial to reducing processing complexity, where i is a positive integer.

Optionally, the M is predefined, or indicated by the network device, or determined by the terminal device.

Optionally, M may be indicated by the network device when scheduling the first downlink channel. That is, M may be carried in the scheduling information of the first downlink channel.

Optionally, M is 2, 4, etc.

Processing method 3: the terminal device merges and processes the first downlink channel at the N-th repetition transmission location among the K repetition transmissions of the first downlink channel to determine whether the first downlink channel is correctly decoded.

Optionally, the N takes one or more values.

Optionally, N may take a plurality of discrete values.

That is, in the processing method 3, the terminal device may merge and process the received first downlink channel at several discrete repetition transmission locations to determine whether the first downlink channel is correctly decoded.

Therefore, by adopting the processing method 3, the terminal device does not need to frequently perform decoding processing on the received first downlink channel, which is beneficial to reducing the processing complexity of the terminal device.

In some embodiments, the N is predefined, or indicated by the network device, or determined by the terminal device.

Optionally, N may be indicated by the network device when scheduling the first downlink channel. That is, N may be carried in the scheduling information of the first downlink channel.

As an example, the N may take values of {N1, N2}. The terminal device then merges the first downlink channel received previously at the N1-th repetition transmission location of the first downlink channel and performs decoding processing on the whole, and merges the first downlink channel received previously at the N2-th repetition transmission location of the first downlink channel and performs decoding processing on the whole. For example, when performing decoding processing at the N2-th repetition transmission location, reference may be made to the result of the decoding at the N1-th repetition transmission location.

It should be understood that in the embodiments of the present application, the values of N may be considered as candidate repetition transmission locations for the terminal device to decode the first downlink channel, and do not mean that the terminal device must decode the first downlink channel at each candidate repetition transmission location. For example, if the terminal device correctly decodes the first downlink channel at one of the candidate repetition transmission locations, the terminal device may not need to continue decoding the first downlink channel at subsequent remaining repetition transmission locations. For example, if the terminal device correctly decodes at the N1-th repetition transmission location of the first downlink channel, the terminal device may terminate the reception of the first downlink channel, that is, the terminal device does not need to continue decoding the first downlink channel at the N2-th repetition transmission location of the first downlink channel.

Optionally, the value of N may include K, or may not include K.

Optionally, in a case where N does not include K, the terminal device performs merging and decoding processing at the last repetition transmission location of the first downlink channel by default, provided that the first (K-1) repetition transmissions of the first downlink channel have not been correctly decoded.

Optionally, in the embodiments of the present application, the terminal device merging the received first downlink channel may include:
performing, by the terminal device, soft merging on the received first downlink channel.

For example, a plurality of soft symbols (symbol-level Log Likehood Ratio (LLR)) after demodulation of the first downlink channel are merged and then decoded.

In some embodiments of the present application, the terminal device may communicate with the network device by back scattering.

For example, the first indication information may be ACK information of the terminal device for the first downlink channel.

In some embodiments, the terminal device may transmit the first indication information by back scattering based on the second signal.

It should be understood that the embodiments of the present application does not limit the source and transmission direction of the second signal.

For example, the second signal may be a dedicated carrier signal, or may be a power supply signal, or may be a repetition transmission of the first downlink channel.

As another example, the second signal may be an uplink signal, or may be a downlink signal.

In some embodiments, the first indication information is transmitted by backscattering based on the X-th repetition transmission of the first downlink channel, where L<X≤K and X is a positive integer.

In some embodiments, X is predefined, or indicated by the network device, or determined by the terminal device.

Optionally, X may be indicated by the network device when scheduling the first downlink channel. That is, X may be carried in the scheduling information of the first downlink channel.

Optionally, X may be (L+1). That is, the terminal device may utilize the (L+1)-th repetition transmission of the first downlink channel (i.e., the next repetition transmission of the first downlink channel that is correctly decoded) to perform back scattering to transmit the first indication information.

In some embodiments, the first indication information is transmitted by back scattering based on the H-th repetition transmission after correctly decoding the first downlink channel, where H is a positive integer.

In some embodiments, the H is predefined, or indicated by the network device, or determined by the terminal device.

Optionally, H may be indicated by the network device when scheduling the first downlink channel. That is, H may be carried in the scheduling information of the first downlink channel.

For example, the H may be 1. That is, the terminal device may utilize the first repetition transmission (i.e., the (L+1)-th repetition transmission) after correctly decoding the first downlink channel to perform back scattering to transmit the first indication information.

In some embodiments, the first indication information is transmitted in a first slot.

In some embodiments, the first slot is determined based on a high-level parameter K1, alternatively, the first slot is a slot configured by a network device for transmitting feedback information of the first downlink channel.

That is, although the terminal device terminates reception of the remaining repetition transmissions of the first downlink channel in advance, the slot location for the terminal device to transmit the feedback information of the first downlink channel remains unchanged.

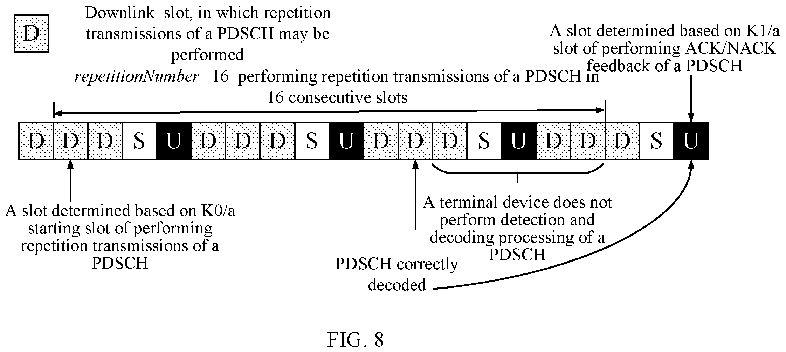

For example, as shown in FIG. 8, the network device schedules repetition transmissions of the PDSCH, where the number of repetition transmissions of the PDSCH is 16, that is, the network device performs the repetition transmissions of the PDSCH in 16 consecutive slots. If the terminal device correctly decodes in the 11th slot (i.e., at the 11th repetition transmission location) of the 16 slots, the terminal device may transmit the first indication information in the slot determined based on K1, or transmit the first indication information in the slot configured by the network device for ACK/NACK feedback of PDSCH.

In some embodiments, the first slot is a slot in which the terminal device correctly decodes the first downlink channel.

That is, after correctly decoding the first downlink channel, the terminal device transmits the first indication information to the network device.

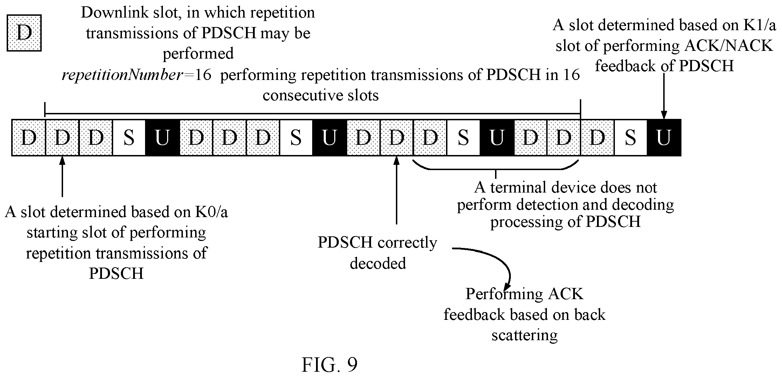

For example, as shown in FIG. 9, the network device schedules repetition transmissions of the PDSCH, where the number of repetition transmissions of the PDSCH is 16, that is, the network device performs repetition transmissions of the PDSCH in 16 consecutive slots. If the terminal device correctly decodes in the 11th slot (i.e., at the 11th repetition transmission location) among the 16 slots, the terminal device may transmit the first indication information in the 11th slot.

In some embodiments, the first slot is the P-th slot after the second slot, the second slot is a slot in which the terminal device correctly decodes the first downlink channel, and P is a positive integer.

That is, the first indication information is transmitted to the network device in the P-th slot after the terminal device correctly decodes the first downlink channel.

Optionally, the P is predefined, or indicated by the network device, or determined by the terminal device.

Optionally, P may be indicated by the network device when scheduling the first downlink channel. That is, P may be carried in the scheduling information of the first downlink channel.

Optionally, P may be 1, or an integer greater than 1.

In some embodiments, the first indication information is transmitted on a first back scattering resource.

Optionally, the first back scattering resource is a dedicated resource for back scattering communication.

In some embodiments, the first back scattering resource is the Q-th back scattering resource after the terminal device correctly decodes the first downlink channel, where Q is a positive integer.

Optionally, Q is predefined, or indicated by the network device, or determined by the terminal device.

Optionally, Q may be indicated by the network device when scheduling the first downlink channel. That is, Q may be carried in the scheduling information of the first downlink channel.

Optionally, Q may be 1, or an integer greater than 1.

For example, the terminal device may transmit the first indication information on the first back scattering resource after correctly decoding the first downlink channel.

In some embodiments, the first back scattering resource is the Y-th back scattering resource after the N-th repetition transmission of the first downlink channel, where Y is a positive integer.

In some embodiments, N is predefined, or indicated by the network device, or determined by the terminal device.

Optionally, N may be indicated by the network device when scheduling the first downlink channel. That is, N may be carried in the scheduling information of the first downlink channel.

Optionally, the N-th repetition transmission may be a repetition transmission location for the terminal device to perform decoding processing on the first downlink channel, or a candidate repetition transmission location for the terminal device to perform decoding processing on the first downlink channel.

Optionally, Y is predefined, or indicated by the network device, or determined by the terminal device.

Optionally, Y may be indicated by the network device when scheduling the first downlink channel. That is, Y may be carried in the scheduling information of the first downlink channel.

Optionally, Y may be 1, or an integer greater than 1.

For example, the terminal device may transmit the first indication information on the first back scattering resource after the N-th repetition transmission of the first downlink channel.

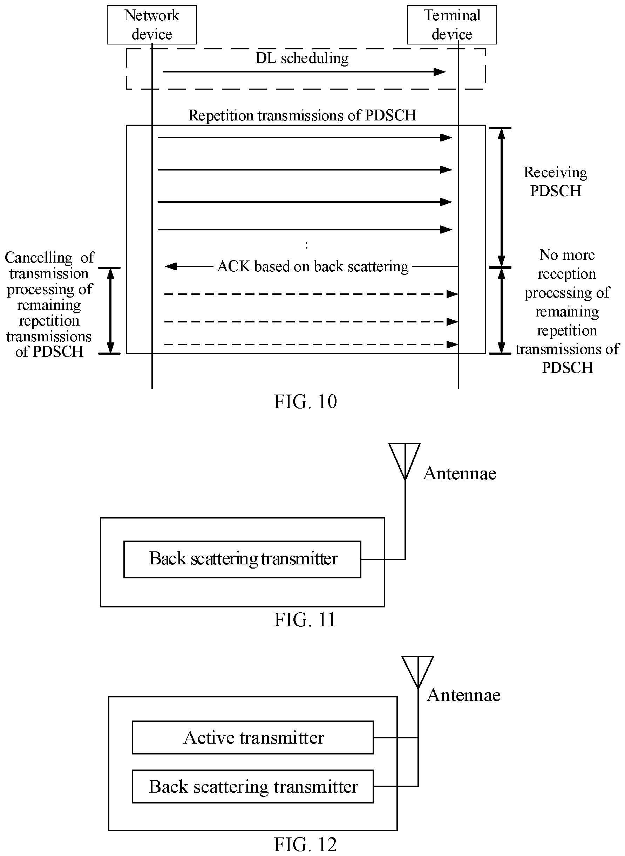

In conjunction with FIG. 10, taking the first downlink channel as the PDSCH as an example, the wireless communication method according to the embodiments of the present application is described.

Step 1, the network device schedules repetition transmissions of the PDSCH.

For example, the network device transmits a PDCCH to the terminal device, and the PDCCH is used to schedule the repetition transmission of the PDSCH.

Optionally, the PDCCH may configure the number K of repetition transmissions of the PDSCH.

Step 2, the network device performs the repetition transmissions of the PDSCH.

Correspondingly, the terminal device receives the repetition transmissions of the PDSCH.

Step 3, when the terminal device receives L repetition transmissions of the PDSCH, the terminal device correctly decodes the PDSCH, and the number L of repetition transmissions of the PDSCH does not reach the configured number K of repetition transmissions. In this case, the terminal device terminates reception of the remaining repetition transmissions of the PDSCH and transmits the first indication information to the network device, for example, transmitting ACK information to the network device based on back scattering transmission.

Step 4: after receiving the first indication information, the network device cancels the remaining repetition transmissions of the PDSCH.

In some embodiments of the present application, the terminal device only supports back scattering mode. For example, the terminal device may be a zero power consumption terminal.

In some embodiments, as shown in FIG. 11, the terminal device includes a back scattering transmitter, and the back scattering transmitter supports the terminal device to perform back scattering communication, for example, transmitting the first indication information to the network device by back scattering mode.

In some other embodiments of the present application, the terminal device may support back scattering mode and traditional communication mode.

That is to say, the terminal device may have the functions of both a traditional terminal and a zero power consumption terminal.

That is, the terminal device may actively transmit a signal, or use a carrier signal transmitted by other devices for back scattering.

In some embodiments, as shown in FIG. 12, the terminal device includes an active transmitter and a back scattering transmitter, where the back scattering transmitter supports the terminal device to perform back scattering communication, such as transmitting the first indication information to the network device by back scattering, and the active transmitter may support the terminal device to perform traditional communication, such as actively transmitting a signal.

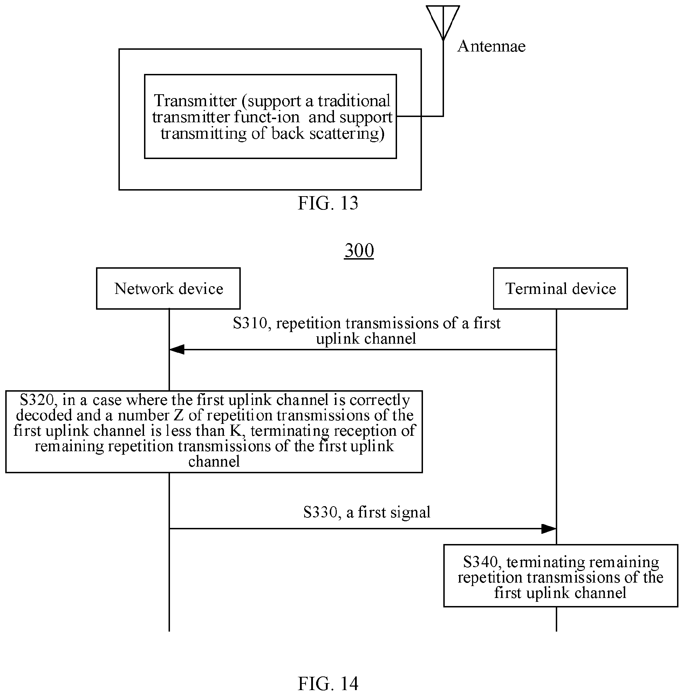

In some embodiments, as shown in FIG. 13, the terminal device includes a transmitter, where the transmitter has the functions of both an active transmitter and a back scattering transmitter, that is, the transmitter may support the terminal device to perform back scattering communication, and may also support the terminal device to perform traditional communication, such as actively transmitting a signal.

In summary, in the embodiments of the present application, in a case where the terminal device correctly decodes the first downlink channel and the number of repetition transmissions of the first downlink channel does not reach the configured number K of repetition transmissions, the terminal device cancels the reception processing of the remaining repetition transmissions of the first downlink channel, and the network device may also cancel the transmission processing of the remaining repetition transmissions of the first downlink channel, which is beneficial to preventing the terminal device and the network device from processing the downlink channel after correct transmission, reducing the transmission delay of the first downlink channel, and reducing the power consumption of the network device and the terminal device. Furthermore, the network device may perform new scheduling on the downlink resource of the canceled remaining repetition transmissions of the first downlink channel, which is beneficial to improving resource utilization.

FIG. 14 is a schematic interaction diagram of another wireless communication method 300 provided by the embodiments of the present application. The method 300 may be performed by a network device in the communication system shown in FIG. 1. As shown in FIG. 14, the method 300 includes the following contents:
S310, performing, by the terminal device, repetition transmissions of a first uplink channel, where the configured number of repetition transmissions of the first uplink channel is K;
S320, in a case where the first uplink channel is correctly decoded and the number Z of repetition transmissions of the first uplink channel is less than K, terminating, by the network device, reception of the remaining repetition transmissions of the first uplink channel; and
S330, transmitting, by the network device, a first signal to the terminal device for indicating the termination of the repetition transmissions of the first uplink channel (or the termination of remaining repetition transmissions of the first uplink channel), or indicating that the network device correctly decodes the first uplink channel.

It should be understood that the termination in the embodiments of the present application may also be replaced by stop.

In some embodiments, the first uplink channel may be an uplink data channel or an uplink control channel, for example, the first uplink channel includes a PUSCH and/or a PUCCH.

Optionally, the value of K may be configured when the network device schedules the repetition transmissions of the first uplink channel.

Optionally, the value of K is determined according to AggregationFactor, numberofrepetitions or repK.

In some embodiments, correctly decoding the first uplink channel may include:
passing, by the received first uplink channel, the CRC.

In some embodiments, correctly decoding the first uplink channel may refer to:
correctly decoding, by the network device, the first uplink channel based on the Z repetition transmissions of the first uplink channel, or
correctly decoding, by the network device, the first uplink channel at the Z-th repetition transmission location of the first uplink channel.

In some embodiments, the Z-th repetition transmission location of the first uplink channel may be a location where the first uplink channel is correctly decoded for the first time among the K repetition transmissions of the first uplink channel.

In some embodiments, the correctly decoding the first uplink channel may also be expressed as correctly receiving the first uplink channel, correctly decrypting the first uplink channel, or correctly solving the first uplink channel, etc.

In some embodiments, the S320 may include:
in a case where the first uplink channel is correctly decoded and the number Z of repetition transmissions of the first uplink channel is less than K, stopping, by the network device, receiving, detecting, decoding, and other processing of the remaining repetition transmissions of the first uplink channel.

That is to say, in a case where the first uplink channel is correctly decoded and the number of repetition transmissions of the first uplink channel does not reach the configured number K of repetition transmissions, the network device may terminate the reception processing of the first uplink channel in advance, which is beneficial to avoiding the network device receiving the uplink channel after correct transmission, improving resource utilization, reducing the transmission delay of the first uplink channel, and reducing the power consumption of the network device.

Optionally, the network device may perform new scheduling on the resources of the canceled remaining repetition transmissions of the first uplink channel, thereby improving resource utilization.

In some embodiments of the present application, as shown in FIG. 14, the method 300 further includes: S340, when receiving the first signal from the network device, terminating, by the terminal device, the remaining repetition transmissions of the first uplink channel.

That is to say, in a case where the first uplink channel is correctly decoded and the number of repetition transmissions of the first uplink channel does not reach the configured number K of repetition transmissions, the terminal device may terminate (or cancel) the transmission processing of the first uplink channel in advance, which is beneficial to avoiding the terminal device transmitting processing of the uplink channel after correct transmission, improving resource utilization, reducing the transmission delay of the first uplink channel, and reducing the power consumption of the terminal device.

It should be understood that the embodiments of the present application do not limit the specific method by which the network device determines whether the first uplink channel is correctly decoded. The following describes the method by which the network device determines whether the first uplink channel is correctly decoded in combination with specific implementations, but the present application is not limited thereto.

Processing method 1: the network device merges and processes each repetition transmission of the first uplink channel to determine whether the first uplink channel is correctly decoded. That is, the processing frequency of the network device may be every repetition transmission.

Optionally, in the processing method 1, the network device may adopt an incremental processing method. For example, when processing the J-th repetition transmission of the first uplink channel, the network device may combine the merging and processing results of the first J-1 repetition transmissions of the first uplink channel, which is beneficial to reducing processing complexity.

Processing method 2: starting from receiving the M-th repetition transmission of the first uplink channel, the network device merges and processes each repetition transmission of the first uplink channel to determine whether the first uplink channel is correctly decoded, where M is a positive integer.

Generally speaking, the probability of successful decoding after receiving one repeptition transmission of the first uplink channel is low. Compared with the processing method 1, the network device performs merged decoding after receiving M repetition transmissions of the first uplink channel, which is beneficial to improving the decoding success rate and avoiding the processing overhead caused by frequent decoding of the received first uplink channel.

Optionally, in the processing method 2, the network device may adopt an incremental processing method starting from the M-th repetition transmission of the first uplink channel. For example, when processing the (M+i)-th repetition transmission of the first uplink channel, the network device may combine the mergeing and processing results of the first (M+i-1) repetition transmissions of the first uplink channel, which is beneficial to reducing processing complexity, where i is a positive integer.

Optionally, the M is predefined or determined by the network device.

Optionally, M is 2, 4, etc.

Processing method 3: the network device merges and processes the first uplink channel at the N-th repetition transmission location in the K repetition transmissions of the first uplink channel to determine whether the first uplink channel is correctly decoded.

Optionally, the N takes one or more values.

Optionally, N may take a plurality of discrete values.

That is, in the processing method 3, the network device may process the received first uplink channel at several discrete repetition transmission locations to determine whether the received first uplink channel is correctly decoded.

Therefore, by adopting the processing method 3, the network device does not need to frequently perform decoding processing on the received first uplink channel, which is beneficial to reducing the processing complexity of the network device.

In some embodiments, the N is predefined or determined by the network device.

As an example, the N may take values of {N1, N2}, then the network device merges the first uplink channel received previously at the N1-th repetition transmission location of the first uplink channel and performs decoding processing on the whole, and merges the first uplink channel received previously at the N2-th repetition transmission location of the first uplink channel and performs decoding processing on the whole. For example, when performing decoding processing at the N2-th repetition transmission location, reference may be made to the result of the decoding at the N1-th repetition transmission location.

It should be understood that in the embodiments of the present application, the values of N may be considered as candidate repetition transmission locations at which the network device decodes the first uplink channel, and do not mean that the network device must decode the first uplink channel at each candidate repetition transmission location. For example, if the network device correctly decodes the first uplink channel at one of the candidate repetition transmission locations, the network device may not need to continue decoding the first uplink channel at subsequent remaing repetition transmission locations. For example, if the network device decodes correctly at the N1-th repetition transmission location of the first uplink channel, the network device may terminate the reception of the first uplink channel, that is, the network device does not need to continue decoding the first uplink channel at the N2-th repetition transmission location of the first uplink channel.

Optionally, the value of N may include K, or may not include K.

Optionally, in a case where N does not include K, the network device performs mergeing and decoding processing at the last repetition transmission location of the first uplink channel by default.

Optionally, in the embodiments of the present application, the network device merging the received first uplink channel may include:
performing, by the network device, soft mergeing on the received first uplink channel.

For example, the network device merges a plurality of soft symbols (symbol-level LLR) after demodulation of the first uplink channels, and then performs decoding processing.

It should be understood that the embodiments of the present application do not limit the location and/or frequency at which the terminal device monitors the first signal. The following describes the monitoring of the first signal by the terminal device in combination with specific implementation but the present application is not limited thereto.

In some embodiments of the present application, the terminal device monitors the first signal starting from the A-th repetition transmission of the first uplink channel, where A is a positive integer.

Generally speaking, the probability of successful decoding after receiving one repetition transmission of the first uplink channel is low, that is, the probability of the network device transmitting the first signal after the first repetition transmission of the first uplink channel is low. Therefore, the terminal device starts to monitor the first signal after A repetition transmissions of the first uplink channel, which is beneficial to reducing the power consumption of the terminal device.

In some embodiments, A is predefined, or indicated by the network device, or determined by the terminal device.

Optionally, A may be indicated by the network device when scheduling the first uplink channel. That is, A may be carried in the scheduling information of the first uplink channel.

Optionally, A may be 1, or an integer greater than 1.

In some other embodiments of the present application, the terminal device monitors the first signal at a location of a first offset after the B-th repetition transmission of the first uplink channel.

Optionally, B is predefined, or indicated by the network device, or determined by the terminal device.

Optionally, B may be indicated by the network device when scheduling the first uplink channel. That is, B may be carried in the scheduling information of the first uplink channel.

Optionally, B may be 1, or an integer greater than 1.

Optionally, B may take one or more values.

Optionally, B may take a plurality of discrete values. That is, the terminal device may receive the first signal at several discrete locations, which is beneficial to reducing the power consumption of the terminal device.

Optionally, the B-th repetition transmission of the first uplink channel is a repetition transmission location at which the network device decodes the first uplink channel, or a candidate repetition transmission location at which the network device decodes the first uplink channel.

Optionally, the B may take values including part or all of the aforementioned value set of N.

Optionally, the first offset is predefined, or indicated by the network device, or determined by the terminal device.

Optionally, the first offset may be 0. That is, the terminal device may monitor the first signal at the B-th repetition transmission location of the first uplink channel.

Optionally, the unit of the first offset may be a slot.

In yet other embodiments of the present application, the terminal device monitors the first signal on a first time domain resource.

In some embodiments, the first time domain resource is predefined, or indicated by the network device.

That is, the network device and the terminal device have the same understanding of the time domain resource where the first signal is located.

For example, the network device may transmit a first signal on an agreed time domain resource, and correspondingly, the terminal device may monitor the first signal on the agreed time domain resource.

It should be understood that the embodiments of the present application does not limit the location where the network device transmits the first signal. The specific occasion when the network device transmits the first signal is described below in combination with specific implementations, but the present application is not limited thereto.

In some embodiments of the present application, the first signal is transmitted in a third slot.

In some embodiments, the third slot is a slot in which the network device correctly decodes the first uplink channel.

That is, the network device correctly decodes the first uplink channel and transmits the first signal.

For example, as shown in FIG. 10, the network device schedules the repetition transmissions of PUSCH, where the number of repetition transmissions of PUSCH is 12, that is, the terminal device repeatedly transmits PUSCH in 12 available slots. If the network device correctly decodes in the 9th slot (i.e., at the 9th repetition transmission location) of the 12 available slots, the network device may transmit the first signal in the 9th slot.

In some other embodiments, the third slot is a C-th slot after the fourth slot, where the fourth slot is a slot in which the network device correctly decodes the first uplink channel, and C is a positive integer.

That is, the network device transmits the first signal in the C-th slot after correctly decoding the first uplink channel.

In some other embodiments of the present application, the first signal is transmitted on a second time domain resource.

In some embodiments, the second time domain resource is a time domain resource at a location of a second offset after the network device correctly decodes the first uplink channel.

That is, the second time domain resource differs from the time domain resource on which the network device correctly decodes the first uplink channel by a second offset.

Optionally, the second offset is predefined or determined by the network device.

Optionally, in a case where the network device determines the second offset, the network device may notify the terminal device of the second offset.

Optionally, the second offset may be 0.

In some other embodiments, the second time domain resource is the first downlink time domain resource after the network device correctly decodes the first uplink channel.

In yet other embodiments, the second time domain resource is the first candidate time domain resource of a plurality of candidate time domain resources after the network device correctly decodes the first uplink channel.

Optionally, the plurality of candidate time domain resources may be predefined.

Optionally, the plurality of candidate time domain resources are determined by the network device. Optionally, the network device may notify the terminal device of the plurality of candidate time domain resources.

In some embodiments of the present application, the first signal is a first sequence. For example, the first sequence may be a specially designed sequence.

It should be understood that when the first signal is implemented by the first sequence, the present application does not limit the generation method of the first sequence. For example, the first sequence may be generated based on a ZC sequence, or may also be generated based on other methods.

In some implementations, the first sequence may be designed based on a method for designing a preamble in random access.

In some other implementations, the first sequence is designed based on a PN sequence, a ZC sequence, etc.

For example, the first sequence may be a fixed combination of 0 and 1, such as W consecutive 0s, or R consecutive 1s, or S consecutive combinations of 0 and 1, or a specific combination of 0 and 1, or the like, where W, R and S are positive integers greater than 1, as long as they are different from existing sequences, and the present application does not limit this.

In some embodiments of the present application, the first signal is downlink control information (DCI).

In some embodiments of the present application, the first signal is ACK information of the network device for the first uplink channel.

In some other embodiments of the present application, the first signal may be termination information. When the terminal device receives the termination information, the repetition transmissions of the first uplink channel are terminated, or the remaining repetition transmissions of the first uplink channel are terminated.

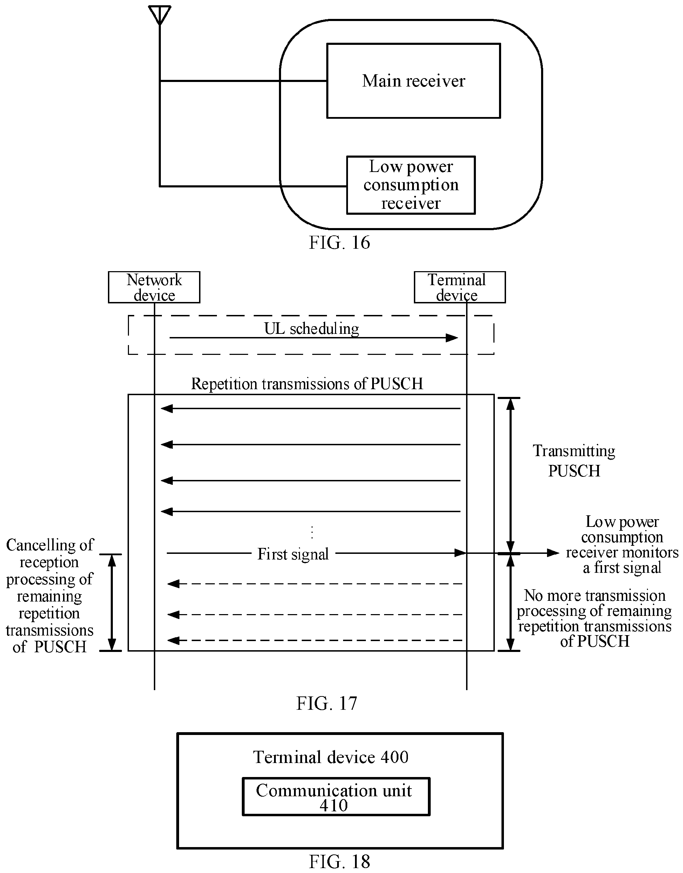

In some embodiments of the present application, as shown in FIG. 16, the terminal device includes a low power consumption receiver, and the first signal is received based on the low power consumption receiver.

In some embodiments, as shown in FIG. 16, the terminal device further includes a main receiver, where the power consumption of the main receiver is higher than the power consumption of the low power consumption receiver.

In some embodiments, the low power consumption receiver is always on.

In some other embodiments, the low power consumption receiver is turned on when the terminal device transmits a first repetition transmission of the first uplink channel.

In yet other embodiments, the low power consumption receiver is turned on at a time domain location of a third offset before starting to monitor the first signal. That is, the time domain location of starting the low power consumption receiver is earlier than the starting location of the terminal device starting to monitor the first signal by the third offset.

In some embodiments, the third offset is predefined, or indicated by the network device, or determined by the terminal device.

In some embodiments of the present application, the method 300 further includes:
transmitting, by the terminal device, first capability information to the network device, where the first capability information is used to indicate that the terminal device has a low power consumption receiver and/or supports receiving the first signal.

For example, if the terminal device has a low power consumption receiver and/or supports receiving a first signal, the network device may transmit a first signal to the terminal device in a case where the first uplink channel is correctly decoded and the number of repetition transmissions of the first uplink channel is less than the configured number of repetition transmissions, so that the terminal device stops transmitting the first uplink channel in advance.

In conjunction with FIG. 17, taking the first uplink channel as PUSCH as an example, the wireless communication method according to the embodiments of the present application is described.

Step 1: the network device schedules the repetition transmissions of PUSCH.

For example, the network device transmits a PDCCH to the terminal device, and the PDCCH is used to schedule the reprtition transmissions of the PUSCH.

Optionally, the PDCCH may configure the number K of repetition transmissions of the PUSCH.

Step 2: the terminal device performs the repetition transmissions of the PUSCH.

Correspondingly, the network device receives the repeptition transmissions of the PUSCH.

Step 3: when the network device receives Z repetition transmissions of the PUSCH, the network device correctly decodes the PUSCH, and the number Z of repetition transmissions of the PUSCH does not reach the configured number K of repetition transmissions. In this case, the network device terminates reception of the remaining repetition transmissions of the PUSCH and transmits a first signal to the terminal device.

Step 4: after receiving the first signal, the terminal device cancels the remaining repetition transmissions of the PUSCH.

In summary, in the embodiments of the present application, in a case where the network device correctly decodes the first uplink channel and the number of repetition transmissions of the first uplink channel does not reach the configured number K of repetition transmissions, the network device cancels the reception of the remaining repetition transmissions of the first uplink channel and transmits a first signal to the terminal device, and the terminal device also cancels transmission of the remaining repetition transmissions of the first uplink channel, which is beneficial to avoiding the network device and the terminal device receiving and transmitting the uplink channel after correct transmission, reducing the transmission delay of the first uplink channel, and reducing the power consumption of the network device and the terminal device. Furthermore, the network device may perform new scheduling on the resources of canceled the remaining repetition transmissions of the first uplink channel, which is beneficial to improving resource utilization.

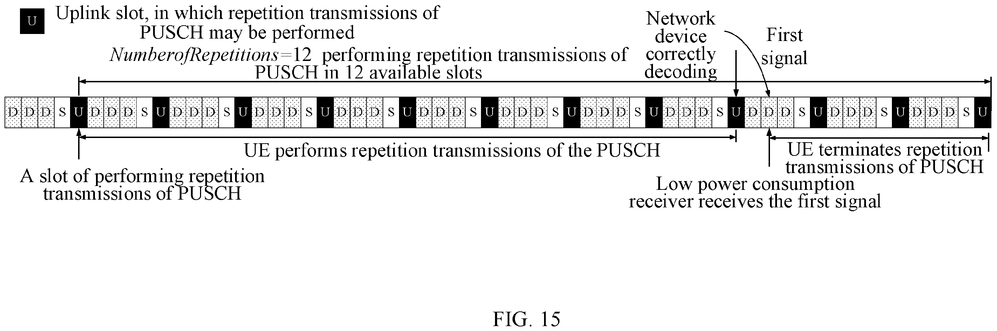

The above, in combination with FIGS. 7 to 17, describes in detail the method embodiments of the present application. The following, in combination with FIGS. 18 to 24, describes in detail the device embodiments of the present application. It should be understood that the device embodiments and the method embodiments correspond to each other, and similar descriptions may refer to the method embodiments.

FIG. 18 shows a schematic block diagram of a terminal device 400 according to the embodiments of the present application. As shown in FIG. 18, the terminal device 400 includes:
a communication unit 410, configured to terminate reception of remaining repetition transmissions of a first downlink channel in a case where the first downlink channel is correctly decoded and the number L of repetition transmissions of the first downlink channel is less than K, where the K represents the configured number of repetition transmissions of the first downlink channel and K is a positive integer; and transmit first indication information to a network device by back scattering, where the first indication information is used to indicate that the terminal device correctly decodes the first downlink channel.

In some embodiments, the first downlink channel includes at least one of:
a physical downlink shared channel (PDSCH), or a physical downlink control channel (PDCCH).

In some embodiments, the first indication information is transmitted by back scattering based on an X-th repetition transmission of the first downlink channel, where L<X≤K and X is a positive integer.

In some embodiments, the X is predefined, or indicated by the network device, or determined by the terminal device.

In some embodiments, the first indication information is transmitted in a first slot.

In some embodiments, the first slot is determined according to a high-level parameter K1, alternatively, the first slot is a slot configured by the network device for transmitting feedback information of the first downlink channel.

In some embodiments, the first slot is a slot in which the terminal device correctly decodes the first downlink channel.

In some embodiments, the first slot is a P-th slot after a second slot, where the second slot is a slot in which the terminal device correctly decodes the first downlink channel, and the P is a positive integer.

In some embodiments, the P is predefined, or indicated by the network device, or determined by the terminal device.

In some embodiments, the first indication information is transmitted on a first back scattering resource.

In some embodiments, the first back scattering resource is a Q-th back scattering resource after the terminal device correctly decodes the first downlink channel, where the Q is a positive integer.

In some embodiments, the Q is predefined, or indicated by the network device, or determined by the terminal device.

In some embodiments, the first back scattering resource is a Y-th back scattering resource after an N-th repetition transmission of the first downlink channel, where the Y is a positive integer.

In some embodiments, the N is predefined, or indicated by the network device, or determined by the terminal device.

In some embodiments, the Y is predefined, or indicated by the network device, or determined by the terminal device.

In some embodiments, the terminal device further includes:
a processing unit, configured to merge and process each repetition transmission of the first downlink channel to determine whether the first downlink channel is correctly decoded.

In some embodiments, the terminal device further includes:
a processing unit, configured to merge and process each repetition transmission of the first downlink channel starting from receiving an M-th repetition transmission of the first downlink channel to determine whether the first downlink channel is correctly decoded.

In some embodiments, the M is predefined, or indicated by the network device, or determined by the terminal device.

In some embodiments, the terminal device further includes:
a processing unit, configured to merge and process the first downlink channel at an N-th repetition transmission location of the K repetition transmissions of the first downlink channel to determine whether the first downlink channel is correctly decoded, where the N takes one or more values.

In some embodiments, the N is predefined, or indicated by the network device, or determined by the terminal device.

In some embodiments, the terminal device includes a back scattering transmitter, and the back scattering transmitter transmits the first indication information by back scattering.

Optionally, in some embodiments, the communication unit may be a communication interface or a transceiver, or an input/output interface of a communication chip or an input/output interface of a system on chip. The processing unit above may be one or more processors.

It should be understood that the terminal device 400 according to the embodiments of the present application may correspond to the terminal device in the method embodiments of the present application, and the above-mentioned and other operations and/or functions of each unit in the terminal device 400 are for realizing the corresponding processes of the terminal device in the method shown in FIG. 7 to 13, and details are not repeated here for the sake of brevity.

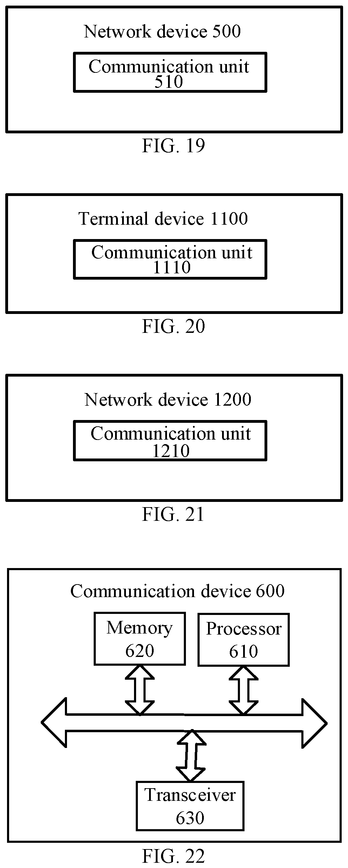

FIG. 19 shows a schematic block diagram of a network device 500 according to the embodiments of the present application. As shown in FIG. 19, the network device 500 includes:
a communication unit 510, configured to receive the first indication information transmitted by the terminal device by back scattering, where the first indication information is used to indicate that the terminal device correctly decodes the first downlink channel; and
terminate the remaining repetition transmissions of the first downlink channel.

In some embodiments, the first downlink channel includes at least one of:
a physical downlink shared channel (PDSCH), or a physical downlink control channel (PDCCH).

In some embodiments, the first indication information is transmitted by back scattering based on an X-th repetition transmission of the first downlink channel, where L<X≤K, and X is a positive integer

In some embodiments, X is predefined, or indicated by the network device, or determined by the terminal device.

In some embodiments, the first indication information is transmitted in a first slot.

In some embodiments, the first slot is determined according to a high-level parameter K1, alternatively, the first slot is a slot configured by the network device for transmitting feedback information of the first downlink channel.

In some embodiments, the first slot is a slot in which the terminal device correctly decodes the first downlink channel.

In some embodiments, the first slot is a P-th slot after a second slot, where the second slot is the slot in which the terminal device correctly decodes the first downlink channel, where the P is a positive integer.

In some embodiments, the P is predefined, or indicated by the network device, or determined by the terminal device.

In some embodiments, the first indication information is transmitted on a first back scattering resource.

In some embodiments, the first back scattering resource is a Q-th back scattering resource after the terminal device correctly decodes the first downlink channel, where the Q is a positive integer.

In some embodiments, the Q is predefined, or indicated by the network device, or determined by the terminal device.

In some embodiments, the first back scattering resource is a Y-th back scattering resource after an N-th repetition transmission of the first downlink channel, where the Y is a positive integer.

In some embodiments, the N is predefined, or indicated by the network device, or determined by the terminal device.

In some embodiments, the Y is predefined, or indicated by the network device, or determined by the terminal device.

In some embodiments, the terminal device includes a back scattering transmitter, and the back scattering transmitter transmits the first indication information by back scattering.

Optionally, in some embodiments, the communication unit may be a communication interface or a transceiver, or an input/output interface of a communication chip or an input/output interface of a system on chip. The processing unit mentioned above may be one or more processors.

It should be understood that the network device 500 according to the embodiments of the present application may correspond to the network device in the method embodiments of the present application, and the above-mentioned and other operations and/or functions of each unit in the network device 500 are for realizing the corresponding processes of the network device in the method shown in FIGS. 7 to 13, and details are not repeated here for the sake of brevity.

FIG. 20 shows a schematic block diagram of a terminal device 1100 according to the embodiments of the present application. As shown in FIG. 20, the terminal device 1100 includes:
a communication unit, configured to perform repetition transmissions of a first uplink channel, where the configured number of repetition transmissions of the first uplink channel is K; and terminate remaining repetition transmissions of the first uplink channel in a case of receiving a first signal from a network device, where the first signal is used to indicate the termination of the repetition transmissions of the first uplink channel.

In some embodiments, the first uplink channel includes at least one of:
a physical uplink shared channel (PUSCH), or a physical uplink control channel (PUCCH).

In some embodiments, the terminal device monitors the first signal starting from an A-th repetition transmission of the first uplink channel, where the A is a positive integer.

In some embodiments, the A is predefined, or indicated by the network device, or determined by the terminal device.

In some embodiments, the terminal device monitors the first signal at a first offset after a B-th repetition transmission of the first uplink channel, where the B takes one or more values and the value of B is a positive integer.

In some embodiments, the B-th repetition transmission of the first uplink channel is a location where the network device decodes the first uplink channel.

In some embodiments, the B is predefined, or indicated by the network device, or determined by the terminal device.

In some embodiments, the first offset is predefined, or indicated by the network device.

In some embodiments, the terminal device monitors the first signal on a first time domain resource.

In some embodiments, the first time domain resource is predefined, or indicated by the network device.

In some embodiments, the first signal is transmitted in a third slot.

In some embodiments, the third slot is a slot in which the network device correctly decodes the first uplink channel.

In some embodiments, the third slot is a C-th slot after a fourth slot, where the fourth slot is a slot in which the network device correctly decodes the first uplink channel, and the C is a positive integer.

In some embodiments, the first signal is transmitted on a second time domain resource.

In some embodiments, the second time domain resource is a time domain resource at a second offset after the network device correctly decodes the first uplink channel.

In some embodiments, the second time domain resource is a first downlink time domain resource after the network device correctly decodes the first uplink channel.

In some embodiments, the second time domain resource is a first candidate time domain resource of a plurality of candidate time domain resources after the network device correctly decodes the first uplink channel.

In some embodiments, the first signal is a first sequence; alternatively
the first signal is downlink control information (DCI), alternatively
the first signal is acknowledgement (ACK) information of the network device for the first uplink channel.

In some embodiments, the terminal device includes a low power consumption receiver, and the first signal is received based on the low power consumption receiver.

In some embodiments, the low power consumption receiver is always on, alternatively
the low power consumption receiver is turned on when the terminal device performs a first repetition transmission of the first uplink channel, alternatively
the low power consumption receiver is turned on at a time domain location of a third offset before monitoring the first signal.

In some embodiments, the third offset is predefined, or indicated by the network device, or determined by the terminal device.

In some embodiments, the communication unit 1110 is further configured to:
transmit first capability information to the network device, where the first capability information is used to indicate that the terminal device has a low power consumption receiver and/or supports receiving the first signal.

Optionally, in some embodiments, the communication unit may be a communication interface or a transceiver, or an input/output interface of a communication chip or an input/output interface of a system on chip. The processing unit above may be one or more processors.

It should be understood that the terminal device 1100 according to the embodiments of the present application may correspond to the terminal device in the method embodiments of the present application, and the above-mentioned and other operations and/or functions of each unit in the terminal device 1100 are for realizing the corresponding processes of the terminal device in the method shown in FIG. 14 to 17, and details are not repeated here for the sake of brevity.

FIG. 21 shows a schematic block diagram of a network device 1200 according to the embodiments of the present application. As shown in FIG. 21, the network device 1200 includes:
a communication unit 1210, configured to terminate reception of remaining repetition transmissions of a first uplink channel in a case where the first uplink channel is correctly decoded and the number Z of repetition transmissions of the first uplink channel is less than K, where K represents a total number of repetition transmissions of the first uplink channel, K is a positive integer, and Z is a positive integer; and transmit a first signal to the terminal device for indicating the termination of repetition transmissions of the first uplink channel.

In some embodiments, the first uplink channel includes at least one of:
a physical uplink shared channel (PUSCH), or a physical uplink control channel (PUCCH).

In some embodiments, the first signal is transmitted in a third slot.

In some embodiments, the third slot is a slot in which the network device correctly decodes the first uplink channel.

In some embodiments, the third slot is a C-th slot after a fourth slot, where the fourth slot is a slot in which the network device correctly decodes the first uplink channel, and C is a positive integer.

In some embodiments, the first signal is transmitted on a second time domain resource.

In some embodiments, the second time domain resource is a time domain resource at a second offset after the network device correctly decodes the first uplink channel.

In some embodiments, the second time domain resource is a first downlink time domain resource after the network device correctly decodes the first uplink channel.

In some embodiments, the second time domain resource is a first candidate time domain resource of a plurality of candidate time domain resources after the network device correctly decodes the first uplink channel.

In some embodiments, the network device further includes:
a processing unit, configured to merge and process each repetition transmission of the first uplink channel to determine whether the first uplink channel is correctly decoded.

In some embodiments, the network device further includes:
a processing unit, configured to merge and process each repetition transmission of the first uplink channel starting from receiving an M-th repetition transmission of the first uplink channel to determine whether the first uplink channel is correctly decoded.

In some embodiments, the network device further includes:
a processing unit, configured to merge and process the first uplink channel at an N-th repetition transmission location of the K repetition transmissions of the first uplink channel to determine whether the first uplink channel is correctly decoded, where the N takes one or more values.

In some embodiments, the communication unit 1210 is further configured to: receive first capability information transmitted by the terminal device, where the first capability information is used to indicate that the terminal device has a low power consumption receiver and/or supports receiving the first signal.

In some embodiments, the first signal is a first sequence; alternatively
the first signal is downlink control information (DCI), alternatively
the first signal is acknowledgement (ACK) information of the network device for the first uplink channel.

In some embodiments, the terminal device includes a low power consumption receiver, and the first signal is received based on the low power consumption receiver.

Optionally, in some embodiments, the communication unit may be a communication interface or a transceiver, or an input/output interface of a communication chip or an input/output interface of a system on chip. The processing unit mentioned above may be one or more processors.

It should be understood that the network device 1200 according to the embodiments of the present application may correspond to the network device in the method embodiments of the present application, and the above-mentioned and other operations and/or functions of each unit in the network device 1200 are for realizing the corresponding processes of the network device in the method shown in FIGS. 14 to 17, and details are not repeated here for the sake of brevity.

FIG. 22 is a schematic structural diagram of a communication device 600 provided by the embodiments of the present application. The communication device 600 shown in FIG. 22 includes a processor 610, and the processor 610 may invoke a computer program from a memory and run the computer program to implement the method in the embodiments of the present application.

Optionally, as shown in FIG. 22, the communication device 600 may further include a memory 620. The processor 610 may invoke a computer program from the memory 620 and run the computer program to implement the method in the embodiments of the present application.

The memory 620 may be a separate device independent of the processor 610, or may be integrated into the processor 610.

Optionally, as shown in FIG. 22, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include an antenna, and the number of the antenna(s) may be one or more.

Optionally, the communication device 600 may specifically be a network device of the embodiments of the present application, and the communication device 600 may implement the corresponding processes implemented by the network device in various methods of the embodiments of the present application, which will not be described in detail here for the sake of brevity.

Optionally, the communication device 600 may specifically be a mobile terminal/terminal device of the embodiments of the present application, and the communication device 600 may implement the corresponding processes implemented by the mobile terminal/terminal device in various methods of the embodiments of the present application, which will not be described in detail here for the sake of brevity.

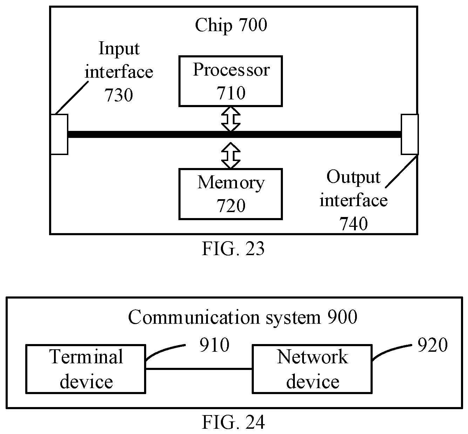

FIG. 23 is a schematic structural diagram of a chip according to the embodiments of the present application. The chip 700 shown in FIG. 23 includes a processor 710, and the processor 710 may invoke a computer program from a memory and run the computer program to implement the method in the embodiments of the present application.

Optionally, as shown in FIG. 23, the chip 700 may further include a memory 720. The processor 710 may invoke a computer program from the memory 720 and run the computer program to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the network device in the embodiments of the present application, and the chip may implement the corresponding processes implemented by the network device in various methods of the embodiments of the present application, which will not be described in detail here for the sake of brevity.

Optionally, the chip may be applied to the mobile terminal/terminal device in the embodiments of the present application, and the chip may implement the corresponding processes implemented by the mobile terminal/terminal device in the various methods of the embodiments of the present application, which will not be described in detail here for the sake of brevity.

It should be understood that the chip mentioned in the embodiments of the present application may also be called a system-level chip, a system chip, a chip system or a system-on-chip, etc.

FIG. 24 is a schematic block diagram of a communication system 900 provided by the embodiments of the present application. As shown in FIG. 24, the communication system 900 includes a terminal device 910 and a network device 920.

The terminal device 910 may be configured to implement the corresponding functions implemented by the terminal device in the above methods, and the network device 920 may be configured to implement the corresponding functions implemented by the network device in the above methods. For the sake of brevity, details are not repeated here.

It should be understood that the processor of the embodiments of the present application may be an integrated circuit chip with signal processing capabilities. In the implementation process, each step of the above method embodiments may be completed by an integrated logic circuit of hardware in a processor or instructions in software form. The above-mentioned processor may be a general purpose processor, a digital signal processor (DSP), an application specific integrated circuit (ASIC), a field programmable gate array (FPGA) or other programmable logic devices, discrete gate or transistor logic devices, and discrete hardware components. The various methods, steps and logic diagrams disclosed in the embodiments of the present application may be implemented or executed. The general purpose processor may be a microprocessor, or the processor may be any conventional processor or the like. The steps of the method disclosed in the embodiments of the present application may be directly implemented as being executed by a hardware decoding processor, or may be implemented by a combination of hardware and software modules in the decoding processor. The software module may be located in a random access memory, a flash memory, a read-only memory, a programmable read-only memory, or an electrically erasable programmable memory, a register, or other mature storage medium in the art. The storage medium is located in the memory, and the processor reads the information in the memory and completes the steps of the above method in combination with its hardware.

It may be understood that the memory in the embodiments of the present application may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM), or a flash memory. The volatile memory may be a random access memory (RAM), which acts as an external cache memory. By way of example and not limitation, a variety of forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the systems and methods described herein is intended to comprise, but not limited to, these and any other suitable types of memories.

It should be understood that the above memory is exemplary but not limiting illustration. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), etc. That is, the memory in the embodiments of the present application is intended to include but is not limited to, these and any other suitable types of memores.

The embodiments of the present application further provide a computer-readable storage medium for storing a computer program.

Optionally, the computer-readable storage medium may be applied to the network device in the embodiments of the present application, and the computer program enables the computer to perform the corresponding processes implemented by the network device in the various methods of the embodiments of the present application. For the sake of brevity, they are not repeated here.

Optionally, the computer-readable storage medium may be applied to the mobile terminal/terminal device in the embodiments of the present application, and the computer program enables the computer to perform the corresponding processes implemented by the mobile terminal/terminal device in the various methods of the embodiments of the present application. For the sake of brevity, they are not repeated here.

The embodiments of the present application further provide a computer program product, including computer program instructions.

Optionally, the computer program product may be applied to the network device in the embodiments of the present application, and the computer program instructions enable the computer to perform the corresponding processes implemented by the network device in the various methods of the embodiments of the present application. For the sake of brevity, they are not repeated here.

Optionally, the computer program product may be applied to the mobile terminal/terminal device in the embodiments of the present application, and the computer program instructions enable the computer to perform the corresponding processes implemented by the mobile terminal/terminal device in the various methods of the embodiments of the present application. For the sake of brevity, they are not repeated here.

The embodiments of the present application further provide a computer program.

Optionally, the computer program may be applied to the network device in the embodiments of the present application. When run on a computer, the computer program enables the computer to perform the corresponding processes implemented by the network device in the various methods of the embodiments of the present application. For the sake of brevity, they are not described here.

Optionally, the computer program may be applied to the mobile terminal/terminal device in the embodiments of the present application. When run on a computer, the computer program enables the computer to perform the corresponding processes implemented by the mobile terminal/terminal device in the various methods of the embodiments of the present application. For the sake of brevity, they are not repeated here.

Those skilled in the art will appreciate that the units and algorithm steps of each example described in conjunction with the embodiments disclosed herein may be implemented by electronic hardware, or a combination of computer software and electronic hardware. Whether these functions are performed in hardware or software depends on the specific application and design constraints of the technical solution. Professional technicians may use different methods to implement the described functions for each specific application, but such implementation should not be considered to be beyond the scope of the present application.

Those skilled in the art may clearly understand that, for the convenience and brevity of description, the specific working processes of the systems, devices and units described above may refer to the corresponding processes in the aforementioned method embodiments and will not be repeated here.

In several embodiments provided in the present application, it should be understood that the disclosed systems, devices and methods may be implemented in other ways. For example, the device embodiments described above are merely illustrative. For example, the division of the units is merely a logical function division. There may be other division methods in actual implementation. For example, a plurality of units or components may be combined or integrated into another system, or some features may be ignored or not executed. Another point is that the mutual coupling or direct coupling or communication connection shown or discussed may be an indirect coupling or communication connection of devices or units through some interfaces, which may be in electrical, mechanical or other forms.

The units described as separate components may or may not be physically separated, and the components shown as units may or may not be physical units, that is, they may be located in one place or distributed over a plurality of network units. Some or all of the units may be selected according to actual needs to achieve the purpose of the solution in the embodiment.

In addition, each functional unit in each embodiment of the present application may be integrated into one processing unit, or each unit may exist physically separately, or two or more units may be integrated into one unit.

If the functions are implemented in the form of software functional units and sold or used as independent products, they may be stored in a computer-readable storage medium. Based on this understanding, the technical solutions of the present application may essentially, or a part of the technical solution that contributes to the prior art, or a part of the technical solution, be embodied in the form of a software product. The computer software product is stored in a storage medium and includes several instructions for enabling a computer device (which may be a personal computer, a server, or a network device, etc.) to perform all or part of the steps of the methods described in various embodiments of the present application. The aforementioned storage medium includes: a USB flash drive (U disk), a mobile hard disk, a Read-Only Memory (ROM), a Random Access Memory (RAM), a disk or an optical disk and other mediums that may store program codes.

The foregoing descriptions are merely specific implementations of the present application, but the protection scope of the present application is not limited thereto. Any skilled person in the art could readily conceive of changes or replacements within the technical scope of the present application, which shall all be included in the protection scope of the present application. Therefore, the protection scope of the present application shall be subject to the protection scope of the claims.

## Claims

1. A method of wireless communication, comprising:
terminating, by a terminal device, reception of remaining repetition transmissions of a first downlink channel, in a case where the first downlink channel is correctly decoded and a number L of repetition transmissions of the first downlink channel is less than K, wherein the K represents a configured number of repetition transmissions of the first downlink channel, and the K is a positive integer; and
transmitting, by the terminal device, first indication information to a network device by back scattering, wherein the first indication information is used to indicate that the terminal device correctly decodes the first downlink channel.

2. The method according to claim 1, wherein the first downlink channel comprises at least one of:
a physical downlink shared channel (PDSCH), or a physical downlink control channel (PDCCH).

3. The method according to claim 1 or 2, wherein the first indication information is transmitted by back scattering based on an X-th repetition transmission of the first downlink channel, wherein L<X≤K, and X is a positive integer.

4. The method according to claim 3, wherein the X is predefined, or indicated by the network device, or determined by the terminal device.

5. The method according to any one of claims 1 to 4, wherein the first indication information is transmitted in a first slot.

6. The method according to claim 5, wherein the first slot is determined according to a high-level parameter K1, or the first slot is a slot configured by the network device for transmitting feedback information of the first downlink channel.

7. The method according to claim 5, wherein the first slot is a slot in which the terminal device correctly decodes the first downlink channel.

8. The method according to claim 5, wherein the first slot is a P-th slot after a second slot, wherein the second slot is a slot in which the terminal device correctly decodes the first downlink channel, and the P is a positive integer.

9. The method according to claim 8, wherein the P is predefined, or indicated by the network device, or determined by the terminal device.

10. The method according to any one of claims 1 to 4, wherein the first indication information is transmitted on a first back scattering resource.

11. The method according to claim 10, wherein the first back scattering resource is a Q-th back scattering resource after the terminal device correctly decodes the first downlink channel, wherein the Q is a positive integer.

12. The method according to claim 11, wherein the Q is predefined, or indicated by the network device, or determined by the terminal device.

13. The method according to claim 10, wherein the first back scattering resource is a Y-th back scattering resource after an N-th repetition transmission of the first downlink channel, wherein the Y is a positive integer.

14. The method according to claim 13, wherein the N is predefined, or indicated by the network device, or determined by the terminal device.

15. The method according to claim 13 or 14, wherein the Y is predefined, or indicated by the network device, or determined by the terminal device.

16. The method according to any one of claims 1 to 15, further comprising:
merging and processing, by the terminal device, each repetition transmission of the first downlink channel to determine whether the first downlink channel is correctly decoded.

17. The method according to any one of claims 1 to 15, further comprising:
merging and processing, by the terminal device, starting from receiving an M-th repetition transmission of the first downlink channel, each repetition transmission of the first downlink channel to determine whether the first downlink channel is correctly decoded.

18. The method according to claim 17, wherein the M is predefined, or indicated by the network device, or determined by the terminal device.

19. The method according to any one of claims 1 to 15, further comprising:
merging and processing, by the terminal device, the first downlink channel at a location of an N-th repetition transmission of the K repetition transmissions of the first downlink channel to determine whether the first downlink channel is correctly decoded, wherein the N takes one or more values.

20. The method according to claim 19, wherein the N is predefined, or indicated by the network device, or determined by the terminal device.

21. The method according to any one of claims 1 to 20, wherein the terminal device comprises a back scattering transmitter, and the back scattering transmitter transmits the first indication information by back scattering.

22. A method of wireless communication, comprising:
receiving, by a network device, first indication information transmitted by a terminal device by back scattering, wherein the first indication information is used to indicate that the terminal device correctly decodes a first downlink channel; and
terminating, by the network device, performing remaining repetition transmissions of the first downlink channel.

23. The method according to claim 22, wherein the first downlink channel comprises at least one of:
a physical downlink shared channel (PDSCH), or a physical downlink control channel (PDCCH).

24. The method according to claim 22 or 23, wherein the first indication information is transmitted by back scattering based on an X-th repetition transmission of the first downlink channel, wherein L<X≤K, and the X is a positive integer.

25. The method according to claim 24, wherein the X is predefined, or indicated by the network device, or determined by the terminal device.

26. The method according to any one of claims 22 to 25, wherein the first indication information is transmitted in a first slot.

27. The method according to claim 26, wherein the first slot is determined according to a high-level parameter K1, or the first slot is a slot configured by the network device for transmitting feedback information of the first downlink channel.

28. The method according to claim 26, wherein the first slot is a slot in which the terminal device correctly decodes the first downlink channel.

29. The method according to claim 26, wherein the first slot is a P-th slot after a second slot, wherein the second slot is a slot in which the terminal device correctly decodes the first downlink channel, and the P is a positive integer.

30. The method according to claim 29, wherein the P is predefined, or indicated by the network device, or determined by the terminal device.

31. The method according to any one of claims 22 to 25, wherein the first indication information is transmitted on a first back scattering resource.

32. The method according to claim 31, wherein the first back scattering resource is a Q-th back scattering resource after the terminal device correctly decodes the first downlink channel, wherein the Q is a positive integer.

33. The method according to claim 32, wherein the Q is predefined, or indicated by the network device, or determined by the terminal device.

34. The method according to claim 31, wherein the first back scattering resource is a Y-th back scattering resource after an N-th repetition transmission of the first downlink channel, wherein the Y is a positive integer.

35. The method according to claim 34, wherein the N is predefined, or indicated by the network device, or determined by the terminal device.

36. The method according to claim 34 or 35, wherein the Y is predefined, or indicated by the network device, or determined by the terminal device.

37. The method according to any one of claims 22 to 36, wherein the terminal device comprises a back scattering transmitter, and the back scattering transmitter transmits the first indication information by back scattering.

38. A method of wireless communication, comprising:
performing, by a terminal device, repetition transmissions of a first uplink channel, wherein a configured number of the repetition transmissions of the first uplink channel is K; and
terminating, by the terminal device, remaining repetition transmissions of the first uplink channel in a case of receiving a first signal from a network device, wherein the first signal is used to indicate a termination of the repetition transmissions of the first uplink channel.

39. The method according to claim 38, wherein the first uplink channel comprises at least one of:
a physical uplink shared channel (PUSCH), or a physical uplink control channel (PUCCH).

40. The method according to claim 38 or 39, wherein the terminal device monitors the first signal starting from an A-th repetition transmission of the first uplink channel, wherein the A is a positive integer.

41. The method according to claim 40, wherein the A is predefined, or indicated by the network device, or determined by the terminal device.

42. The method according to claim 38 or 39, wherein the terminal device monitors the first signal at a first offset after a B-th repetition transmission of the first uplink channel, wherein the B takes one or more values, and the value of the B is a positive integer.

43. The method according to claim 42, wherein the B-th repetition transmission of the first uplink channel is a location where the network device decodes the first uplink channel.

44. The method according to claim 42 or 43, wherein the B is predefined, or indicated by the network device, or determined by the terminal device.

45. The method according to any one of claims 42 to 44, wherein the first offset is predefined, or indicated by the network device.

46. The method according to claim 38 or 39, wherein the terminal device monitors the first signal on a first time domain resource.

47. The method according to claim 46, wherein the first time domain resource is predefined, or indicated by the network device.

48. The method according to any one of claims 38 to 47, wherein the first signal is transmitted in a third slot.

49. The method according to claim 48, wherein the third slot is a slot in which the network device correctly decodes the first uplink channel.

50. The method according to claim 48, wherein the third slot is a C-th slot after a fourth slot, wherein the fourth slot is a slot in which the network device correctly decodes the first uplink channel, wherein C is a positive integer.

51. The method according to any one of claims 38 to 47, wherein the first signal is transmitted on a second time domain resource.

52. The method according to claim 51, wherein the second time domain resource is a time domain resource at a second offset after the network device correctly decodes the first uplink channel.

53. The method according to claim 51, wherein the second time domain resource is a first downlink time domain resource after the network device correctly decodes the first uplink channel.

54. The method according to claim 51, wherein the second time domain resource is a first candidate time domain resource of a plurality of candidate time domain resources after the network device correctly decodes the first uplink channel.

55. The method according to any one of claims 38 to 54, wherein
the first signal is a first sequence; or
the first signal is downlink control information (DCI), or
the first signal is acknowledgement (ACK) information of the network device for the first uplink channel.

56. The method according to any one of claims 38 to 55, wherein the terminal device comprises a low power consumption receiver, and the first signal is received based on the low power consumption receiver.

57. The method according to claim 56, wherein the low power consumption receiver is always on, or
the low power consumption receiver is turned on in a case where the terminal device performs a first repetition transmission of the first uplink channel, or
the low power consumption receiver is turned on at a time domain location of a third offset before monitoring the first signal.

58. The method according to claim 57, wherein the third offset is predefined, or indicated by the network device, or determined by the terminal device.

59. The method according to any one of claims 38 to 58, further comprising:
transmitting, by the terminal device, first capability information to the network device, wherein the first capability information is used to indicate that the terminal device has a low power consumption receiver and/or supports receiving the first signal.

60. A method of wireless communication, comprising:
terminating, by a network device, reception of remaining repetition transmissions of a first uplink channel, in a case where the first uplink channel is correctly decoded and a number Z of repetition transmissions of the first uplink channel is less than K, wherein the K represents a total number of repetition transmissions of the first uplink channel, the K is a positive integer, and the Z is a positive integer; and
transmitting, to a terminal device, a first signal for indicating a termination of repetition transmissions of the first uplink channel.

61. The method according to claim 60, wherein the first uplink channel comprises at least one of:
a physical uplink shared channel (PUSCH), or a physical uplink control channel (PUCCH).

62. The method according to claim 60 or 61, wherein the first signal is transmitted in a third slot.

63. The method according to claim 62, wherein the third slot is a slot in which the network device correctly decodes the first uplink channel.

64. The method according to claim 62, wherein the third slot is a C-th slot after a fourth slot, wherein the fourth slot is a slot in which the network device correctly decodes the first uplink channel, wherein the C is a positive integer.

65. The method according to claim 60 or 61, wherein the first signal is transmitted on a second time domain resource.

66. The method according to claim 65, wherein the second time domain resource is a time domain resource of a second offset after the network device correctly decodes the first uplink channel.

67. The method according to claim 65, wherein the second time domain resource is a first downlink time domain resource after the network device correctly decodes the first uplink channel.

68. The method according to claim 65, wherein the second time domain resource is a first candidate time domain resource of a plurality of candidate time domain resources after the network device correctly decodes the first uplink channel.

69. The method according to any one of claims 60 to 68, further comprising:
merging and processing, by the network device, each repetition transmission of the first uplink channel to determine whether the first uplink channel is correctly decoded.

70. The method according to any one of claims 60 to 68, further comprising:
starting from receiving an M-th repetition transmission of the first uplink channel, merging and processing each repetition transmission of the first uplink channel to determine whether the first uplink channel is correctly decoded.

71. The method according to any one of claims 60 to 68, further comprising:
merging and processing the first uplink channel at a location of an N-th repetition transmission of the K repetition transmissions of the first uplink channel to determine whether the first uplink channel is correctly decoded, wherein the N takes one or more values.

72. The method according to any one of claims 60 to 71, further comprising:
receiving, by the network device, first capability information transmitted by the terminal device, wherein the first capability information is used to indicate that the terminal device has a low power consumption receiver and/or supports receiving the first signal.

73. The method according to any one of claims 60 to 72, wherein
the first signal is a first sequence; or
the first signal is downlink control information (DCI), or
the first signal is acknowledgement (ACK) information of the network device for the first uplink channel.

74. The method according to any one of claims 60 to 73, wherein the terminal device comprises a low power consumption receiver, and the first signal is received based on the low power consumption receiver.

75. A terminal device, comprising:
a communication unit, configured to terminate reception of remaining repetition transmissions of a first downlink channel in a case where the first downlink channel is correctly decoded and a number L of repetition transmissions of the first downlink channel is less than K, wherein the K represents a configured number of repetition transmissions of the first downlink channel, and the K is a positive integer; and transmit first indication information to a network device by back scattering, wherein the first indication information is used to indicate that the terminal device correctly decodes the first downlink channel.

76. A network device, comprising:
a communication unit, configured to receive first indication information transmitted by a terminal device by back scattering, wherein the first indication information is used to indicate that the terminal device correctly decodes a first downlink channel; and
terminate remaining repetition transmissions of the first downlink channel.

77. A terminal device, comprising:
a communication unit, configured to perform repetition transmissions of a first uplink channel, wherein a configured number of the repetition transmissions of the first uplink channel is K; and terminate remaining repetition transmissions of the first uplink channel in a case of receiving a first signal from a network device, wherein the first signal is used to indicate a termination of the repetition transmissions of the first uplink channel.

78. A network device, comprising:
a communication unit, configured to terminate reception of remaining repetition transmissions of a first uplink channel in a case where the first uplink channel is correctly decoded and a number Z of repetition transmissions of the first uplink channel is less than K, wherein the K represents a total number of repetition transmissions of the first uplink channel, the K is a positive integer, and the Z is a positive integer; and transmit a first signal to a terminal device for indicating a termination of repetition transmission of the first uplink channel.

79. A terminal device, comprising: a processor and a memory, wherein the memory is configured to store a computer program, and the processor is configured to invoke and run the computer program stored in the memory to perform the method according to any one of claims 1 to 21, or the method according to any one of claims 38 to 59.

80. A network device, comprising: a processor and a memory, wherein the memory is configured to store a computer program, and the processor is configured to invoke and run the computer program stored in the memory to perform the method according to any one of claims 22 to 37, or the method according to any one of claims 60 to 74.

81. A chip, comprising: a processor configured to invoke a computer program from a memory and run the computer program, so as to enable a device equipped with the chip to perform the method according to any one of claims 1 to 21, or the method according to any one of claims 22 to 37, or the method according to any one of claims 38 to 59, or the method according to any one of claims 60 to 74.

82. A computer-readable storage medium, configured to store a computer program, wherein the computer program enables a computer to perform the method according to any one of claims 1 to 21, or the method according to any one of claims 22 to 37, or the method according to any one of claims 38 to 59, or the method according to any one of claims 60 to 74.

83. A computer program product, comprising computer program instructions, wherein the computer program instructions enable a computer to perform the method according to any one of claims 1 to 21, or the method according to any one of claims 22 to 37, or the method according to any one of claims 38 to 59, or the method according to any one of claims 60 to 74.

84. A computer program, wherein the computer program enables a computer to perform the method according to any one of claims 1 to 21, or the method according to any one of claims 22 to 37, or the method according to any one of claims 38 to 59, or the method according to any one of claims 60 to 74.
